# EUROPEAN PATENT APPLICATION

(11) **EP 1 398 984 A1**
(43) Date of publication of application: **17.03.2004**
(21) Application number: 01943801.9
(22) Date of filing: 21.06.2001
(51) Int. Cl.: H04Q 7/36

(54) **WIRELESS COMMUNICATION BASE STATION SYSTEM, WIRELESS COMMUNICATION METHOD, WIRELESS COMMUNICATION PROGRAM, AND COMPUTER−READABLE RECORDED MEDIUM ON WHICH WIRELESS COMMUNICATION PROGRAM IS RECORDED**

(71) Applicant: MITSUBISHI DENKI KABUSHIKI KAISHA, Tokyo 100-8310 (JP)
(72) Inventor: TOMOE, Naohito, c/o Mitsubishi Denki K.K., Tokyo 100-8310 (JP); KASHIWAGI, Takashi, c/o Mitsubishi Denki K.K., Tokyo 100-8310 (JP)
(74) Representative: Sajda, Wolf E., Dipl.-Phys.
(86) International application number: PCT/JP2001/005299
(87) International publication number: WO 2003/001834

(57) **Abstract**

In the configuration of the radio communication base station system which connects the macro radio/optical sending-receiving unit 400 which communicates by radio with the mobile station 300 which exists in the macro sector zone 100 and the micro radio/optical sending-receiving unit 500 which communicates by radio with the mobile station which exists in the micro sector zone 200 to the base station 700 which is used commonly using the optical fiber network 600, it is possible to reduce the interference between the macro sector zone and the micro sector zone, which occurs in applying the CDMA method using the same frequency band to a cell configuration in which the macro sector zone 100 and the micro sector zone 200 coexist, and increase the capacity of the base station.

## Description

### Technical Field

This invention relates to a radio communication base station system in mobile communications according to Code Division Multiple Access method (CDMA: Code Devision Multiple Access, hereinafter called CDMA method) using a spread spectrum modulation method.

### Background Art

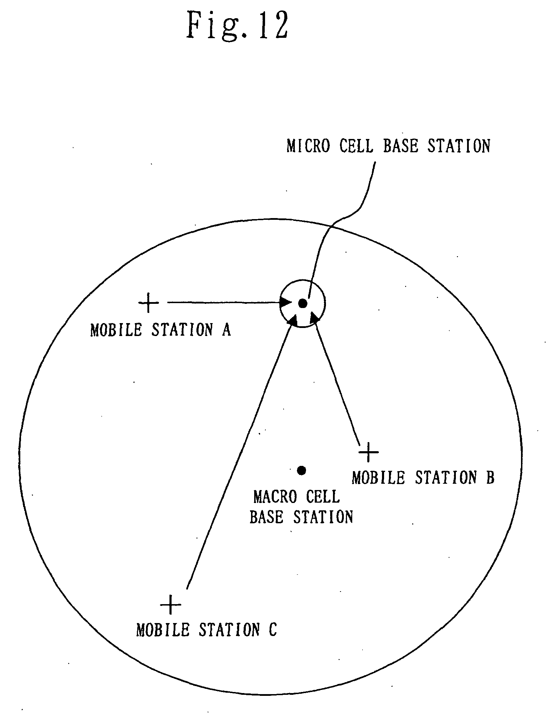

A radio communication system according to the related art in mobile communications in which a macro cell and a micro cell coexist is disclosed in Japanese Unexamined Published Patent Application Hei 9-247079 by YR.P. Ido Tsushin Kiban Gijyutsu Kenkyusho K.K., published on September 19, 1997. With reference to Figs. 12-16, the related art is explained.

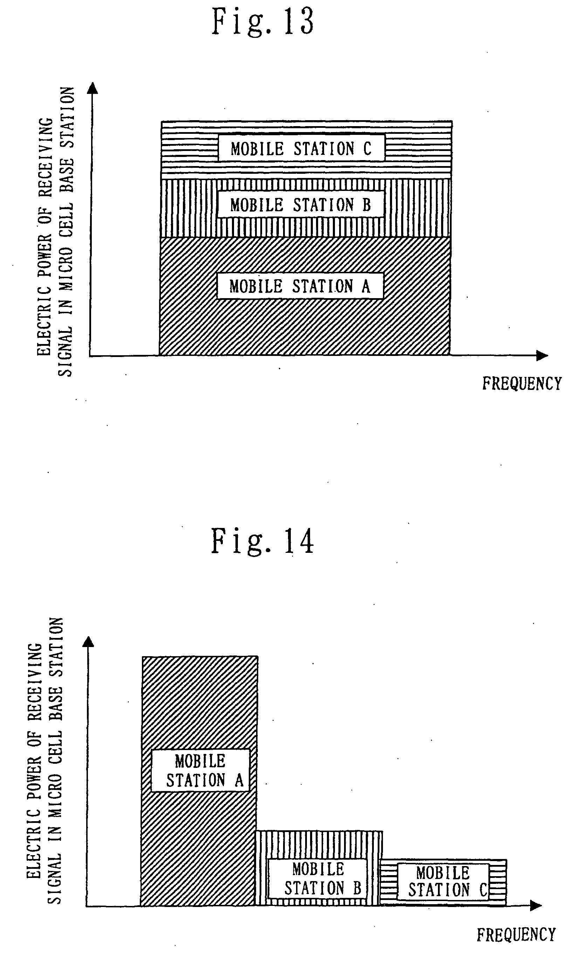

In Fig. 12, the micro cell exists in the macro cell, and mobile stations A, B and C connected to the macro cell exist. The mobile stations are cellular phones, etc. which perform the mobile communications. In each of the mobile stations A, B and C, sending electric power is controlled so that electric power received at a macro cell base station becomes constant. A signal sent from the mobile station attenuates in proportion to a distance. Therefore, the sending electric power of the mobile stations A and C is higher than the sending electric power of the mobile station B because of relationship between a location of the macro cell base station and a location of each of the mobile stations. Since the mobile station A is close to a micro cell base station, the signal sent from the mobile station A causes strong interference in the micro cell. Meanwhile, since electric power of the signal sent from the mobile station B to the macro cell base station is relatively low, there is relatively low interference in the micro cell base station compared with the mobile station A. Further, the mobile station C sends to the macro cell base station with high sending electric power. However, since the mobile station C is far from the micro cell base station, there is relatively low interference in the micro cell base station like the mobile station B compared with the mobile station A. The interference in the micro cell caused by the mobile stations B and C is low compared with the interference caused by the mobile station A. Consequently, when a same frequency band is used in the macro cell and the micro cell, electric power of a received signal received by the micro cell base station from the mobile stations A, B and C which are connected to the macro cell is illustrated in Fig. 13. This illustrates interference electric power received by the micro cell base station. This shows that the signal from the mobile station A, of which electric power of the received signal in the micro cell is high, causes strong interference, and consequently, quality of the communication drops.

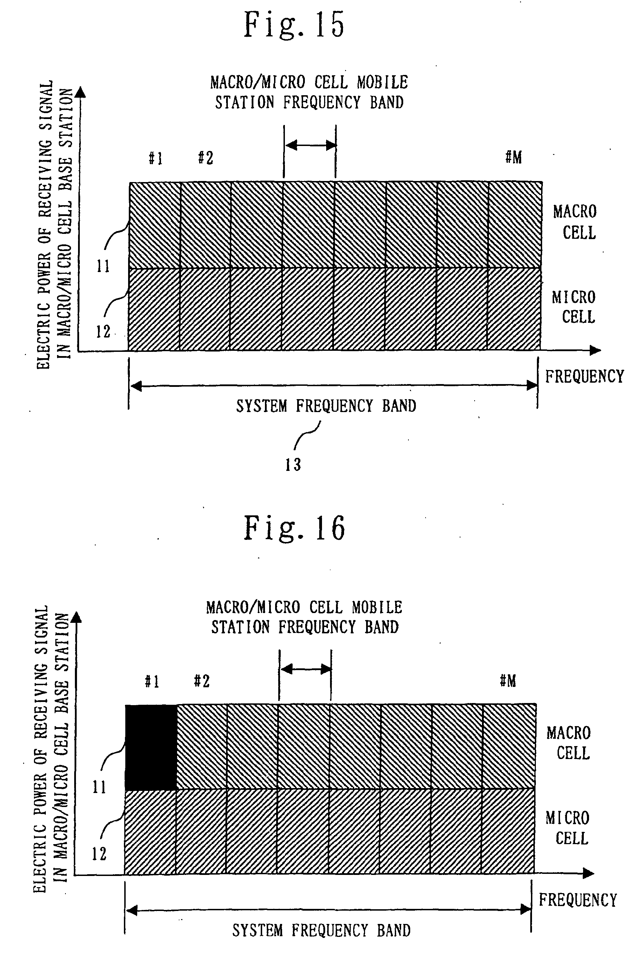

Japanese Unexamined Published Patent Application Hei 9-247079 offers a mechanism for suppressing the interference in the micro cell base station caused by the mobile station which is connected to the macro cell when the CDMA method is applied to a cell structure in which the macro cell and the micro cell coexist. Its concept is illustrated in Fig. 14. Fig. 14 shows an example of using a frequency band in a system by dividing into three. The mobile station A uses lower one-third of the frequency band in the system, the mobile station B uses middle one-third of the frequency band in the system, and the mobile station C uses upper one-third of the frequency band in the system. As described earlier, the signal sent from the mobile station A causes the high interference electric power as illustrated in Fig. 14. However, this only degrades the lower one-third of the frequency band in the system. This does not cause the interference in remaining two-thirds of the frequency band. Therefore, concerning on the micro cell mobile station which uses the remaining two-thirds of the frequency band, there is less the interference caused by the macro cell mobile station. Figs. 15 and 16 illustrate an embodiment of an invention using this concept. Figs. 15 and 16 illustrate an embodiment of using the frequency band in the system in the micro cell and the macro cell by dividing the frequency band in the system similarly. In this embodiment, a frequency band 13 which can be used in the system is set as W, and the frequency band 13 in the system is used in the macro cell and the micro cell by dividing into M frequency bands (#1, #2, ···, #M). Therefore, frequency band W used by each of macro cell mobile stations and micro cell mobile stations is W/M. Specifically, a signal is transmitted from each of the mobile stations by being spread in a narrow band of W/M. The macro cell base station and the micro cell base station allocate each of the mobile stations to each of narrow bands for distributing. In this case, for example, a signal from a macro cell mobile station 11 which uses band # 1 causes the interference only in a micro cell mobile station 12 which uses a same band, however it does not cause the interference in a micro cell mobile station which uses a different band. As stated, when the macro cell mobile station 11 which uses the band #1 exists in the vicinity of the micro cell base station, there is strong interference in the micro cell base station 12 which uses the band #1, and the quality of the communication drops. However, the micro cell base station which uses bands #2-#M is not affected. Specifically, in the micro cell, it is possible to communicate in #2-#M without the interference caused by the macro cell mobile station 11 which uses the band #1. As stated, in the macro cell and the micro cell, the frequency band in the system is used by dividing into a plurality of frequency bands. Consequently, the interference caused by the macro cell mobile station is reduced.

However, when the frequency band in the system is divided into the plurality of frequency bands in the related art, an individual filter is necessary for each of the divided frequency bands to restrict the band in a high frequency band. Hence, it is difficult to reduce a size of a circuit, weight and a price. Further, there is a problem that management becomes complex. Furthermore, when the macro cell base station and the micro cell base station are set separately, this causes more problem for the micro cell base station which has a restriction in selecting an appropriate place for setting the base station. The micro cell base station is additionally set for convenience to improve utilization efficiency of communication channels in considering a zone where traffic is concentrated as well as a zone where there is less traffic. Therefore, there is a problem that a capacity of the system is restricted as a frequency band used in a system of a macro sector zone is not able to be used in communication by the micro sector base station.

This invention is intended to provide a radio communication base station system which does not restrict the frequency band both in the macro sector zone (macro cell) and a micro sector zone (micro cell) for increasing the capacity of the system for the macro sector zone and the micro sector zone.

### Disclosure of the Invention

A radio communication base station system according to this invention comprises a macro radio communication unit for communicating by radio with a mobile station which exists in a macro sector zone which is an area for communicating by radio with the mobile station, a micro radio communication unit for communicating by radio with the mobile station which exists in a micro sector zone which is a part of the macro sector zone, and a base station which is commonly used by the macro radio communication unit and the micro radio communication unit.

Further, the radio communication base station system further comprises a radio network control device for allocating a setup channel which is necessary for the mobile station to register a location respectively for the macro radio communication unit and the micro radio communication unit and sending allocation information of the allocated channel to the base station.

Further, the base station receives a location registration request sent by the mobile station via the macro radio communication unit and the micro radio communication unit, and sends the location registration request received to the radio network control device, and the radio network control device judges if the location registration request sent by the base station is a request for registering a location in the micro sector zone or a request for registering a location in the macro sector zone, sends location registration permission to the base station when the location registration request is the request for registering the location in the micro sector zone, and sends location registration unpermission to the base station when the location registration request is the request for registering the location in the macro sector zone.

Further, the base station includes a plurality of encoding/modulating units set for each of a plurality of mobile stations for encoding and modulating an electric signal, and a multiplexer connected to the plurality of coding/modulating units for multiplexing the electric signal modulated by the plurality of coding/modulating units.

Further, the base station includes a plurality of encoding/modulating units set for each of a plurality of mobile stations for encoding and modulating an electric signal, and a multiplexer connected to all of the plurality of coding/modulating units for multiplexing the electric signal modulated by the plurality of coding/modulating units.

Further, the base station includes a plurality of encoding/modulating units set for all of a plurality of mobile stations for encoding and modulating an electric signal, and a multiplexer connected to all of the plurality of coding/modulating units for multiplexing the electric signal modulated by the plurality of coding/modulating units and outputting the electric signal multiplexed, and the micro radio communication unit includes a delay unit for operating a time factor of the electric signal outputted by the multiplexer.

Further, the macro radio communication unit includes an electric/optical converter for converting an electric signal into an optical signal, and the micro radio communication unit includes an electric/optical converter for converting an electric signal to an optical signal. A plurality of base stations includes a plurality of optical/electric converters for converting the optical signals converted by macro radio communication unit and the micro radio communication unit into electric signals, and a demodulating/decoding unit connected to the plurality of optical/electric converters for demodulating and decoding the electric signal converted by the plurality of optical/electric converters.

Further, the macro radio communication unit includes an electric/optical converter for converting an electric signal into an optical signal, and the micro radio communication unit includes an electric/optical converter for converting an electric signal into an optical signal. The base stations includes a plurality of optical/electric converters for converting the optical signals converted by the macro radio communication unit and the micro radio communication unit into electric signals, and a demodulating/decoding unit connected to all of the plurality of optical/electric converters for demodulating and decoding the electric signal converted by the plurality of optical/electric converters.

Further, the macro radio communication unit includes an electric/optical converter for converting an electric signal into an optical signal, and the micro radio communication unit includes an electric/optical converter for converting an electric signal into an optical signal and a delay unit for operating a time factor of a radio signal. The base stations includes a plurality of optical/electric converters for converting the optical signals converted by the macro radio communication unit and the micro radio communication unit into electric signals, and a demodulating/decoding unit connected to all of the plurality of optical/electric converters for demodulating and decoding the electric signals converted by the plurality of optical/electric converters.

Further, the encoding/modulating unit of the base station includes a sector/antenna branch selector in sending system for selecting a plurality of macro radio communication units and micro radio communication units.

Further, the demodulating/decoding unit of the base station includes a sector/antenna branch selector in receiving system for selecting and receiving the electric signals converted by the plurality of the optical/electric converters.

Further, the base station includes an interference replica producing unit connected to all of the demodulating/decoding units for producing interference information from a received signal demodulated by the demodulating/decoding unit, spread information for spreading the received signal and an estimated transmission path characteristic estimated a transmission path of the received signal.

Further, the demodulating/decoding unit includes a moving speed detecting unit for detecting and sending a moving speed of the mobile station, and the radio network control device receives the moving speed of the mobile station sent by the demodulating/decoding unit, compares the moving speed with a reference moving speed determined by the radio network control device, and sends channel allocation information for allocating to the macro radio communication unit to the base station when the moving speed of the mobile station is higher than the reference moving speed, and sends channel information for allocating to the micro radio communication unit to the base station when the moving speed of the mobile station is at or lower than the reference moving speed.

Further, the base station compares a receiving electric power of a received signal of the mobile station with a reference receiving electric power determined by the base station, and the interference replica producing unit produces an interference replica, deducts the interference replica from a received signal of another mobile station existing in one of the micro sector zone and the macro sector zone located in a same direction with an arrival angle of the received signal from the mobile station, and directs an antenna toward the arrival direction of the received signal from the mobile station when the receiving electric power is higher than the reference receiving electric power, and deducts the interference replica from a received signal of another mobile station existing in the micro sector zone and a micro sector zone adjacent to the micro sector zone, and deducts the interference replica from a received signal of another mobile station existing in the macro sector zone located in the same direction with the arrival angle of the received signal from the mobile station when the receiving electric power is at or lower than the reference receiving electric power.

Further, the macro radio communication unit includes an adaptive array antenna, and the micro radio communication unit includes one of an omni-antenna and a sector antenna.

Further, a radio communication base station system according to this invention comprises a plurality of micro radio communication units including an electric/optical converter for converting an electric signal into an optical signal, for communicating by radio with a mobile station existing in a micro sector zone which is an area for communicating by radio with the mobile station, a radio network control device for allocating a channel for communicating by radio to a micro radio communication unit, and sending channel allocation information allocated, a base station which is commonly used by the plurality of micro radio communication units, a plurality of encoding/modulating units including a sector/antenna branch selector in sending system respectively set for a plurality of mobile stations for selecting the micro radio communication unit for communicating by radio for the micro sector zone of which receiving electric power of a received signal of the mobile station is high and the plurality of micro radio communication units for communicating by radio for the micro sector zone adjacent to the micro sector zone for encoding and modulating an electric signal, a multiplexer connected to the plurality of encoding/modulating units for multiplexing the electric signal modulated by the plurality of encoding/modulating units, a plurality of optical/electric converters for converting the optical signal converted by the micro radio communication unit into an electric signal, and a demodulating/decoding unit connected to the plurality of optical/electric converters for demodulating and decoding the electric signal, including a sector/antenna branch selector in receiving system for selecting the micro radio communication unit for communicating by radio for the micro sector zone of which receiving electric power of the received signal of the mobile station is high and the plurality of micro radio communication units for communicating by radio for the micro sector zone adjacent to the micro sector zone from the received signal of the mobile station, converted by the plurality of optical/electric converters.

Further, a radio communication method according to this invention comprises communicating by radio with a mobile station existing in a macro sector zone which is an area for communicating by radio with the mobile station, communicating by radio with the mobile station existing in a micro sector zone which is a part of the macro sector zone, and communicating by radio with the mobile station existing in the macro sector zone and communicating by radio with the mobile station existing in the micro sector zone by using a base station which is used commonly.

Further, a computer-executable radio communication program according to this invention comprises code segment for communicating by radio with a mobile station existing in a macro sector zone which is an area for communicating by radio with the mobile station, code segment for communicating by radio with the mobile station existing in a micro sector zone which is a part of the macro sector zone, and code segment for communicating by radio with the mobile station existing in the macro sector zone and communicating by radio with the mobile station existing in the micro sector zone by using a base station which is used commonly.

Further, a computer-readable storage medium storing a computer-executable radio communication program according to this invention comprises code segment for communicating by radio with a mobile station existing in a macro sector zone which is an area for communicating by radio with the mobile station,
code segment for communicating by radio with the mobile station existing in a micro sector zone which is a part of the macro sector zone, and code segment for communicating by radio with the mobile station existing in the macro sector zone and communicating by radio with the mobile station existing in the micro sector zone by using a base station which is used commonly.

### Brief Description of the Drawings

Fig. 1 shows a conceptual diagram of a radio communication base station system according to Embodiment 1.
Fig. 2 shows a configuration chart of the radio communication base station system according to Embodiment 1.
Fig. 3 illustrates a procedure in registering a location with a mobile station according to Embodiment 1.
Fig. 4 shows a flow chart illustrating a method for allocating a sector zone by a radio network control device.
Fig. 5 illustrates an effect of reducing sending electric power of a macro radio/optical sending-receiving unit and a micro radio/optical sending-receiving unit according to Embodiment 1.
Fig. 6 illustrates an effect of reducing sending electric power of a mobile station.
Fig. 7 shows a configuration chart of the macro radio/optical sending-receiving unit, the micro radio/optical sending-receiving unit and a base station according to Embodiment 1.
Fig. 8 shows a configuration chart of an encoding/modulating unit and a demodulating/decoding unit according to Embodiment 1.
Fig. 9 shows a flow chart of operation for eliminating interference according to Embodiment 1.
Fig. 10 shows a configuration chart of a radio communication base station system according to Embodiment 3.
Fig. 11 illustrates switching of antenna branches which are used for communication with a mobile station in Embodiment 3.
Fig. 12 shows a configuration chart of a radio communication base station system in which a macro sector zone and a micro sector zone coexist according to the related art.
Fig. 13 illustrates electric power of a received signal received by a micro sector base station in a system configuration of Fig. 12.
Fig. 14 illustrates electric power of the received signal received by the micro sector base station when a frequency band in a system is used by dividing into three in the system configuration of Fig. 12.
Fig. 15 shows an operational principle chart illustrating a method for avoiding the interference between the macro sector zone and the micro sector zone by dividing the frequency of the system in the radio communication base station system in which the macro sector zone and the micro sector zone coexist according to the related art.
Fig. 16 shows an operational principle chart illustrating the interference between the macro sector zone and the micro sector zone which use band #1 by dividing the frequency of the system in the radio communication base station system in which the macro sector zone and the micro sector zone coexist according to the related art.

### Best Mode for Carrying out the Invention

### Embodiment 1.

### (1) Explanation on a basic configuration of this embodiment

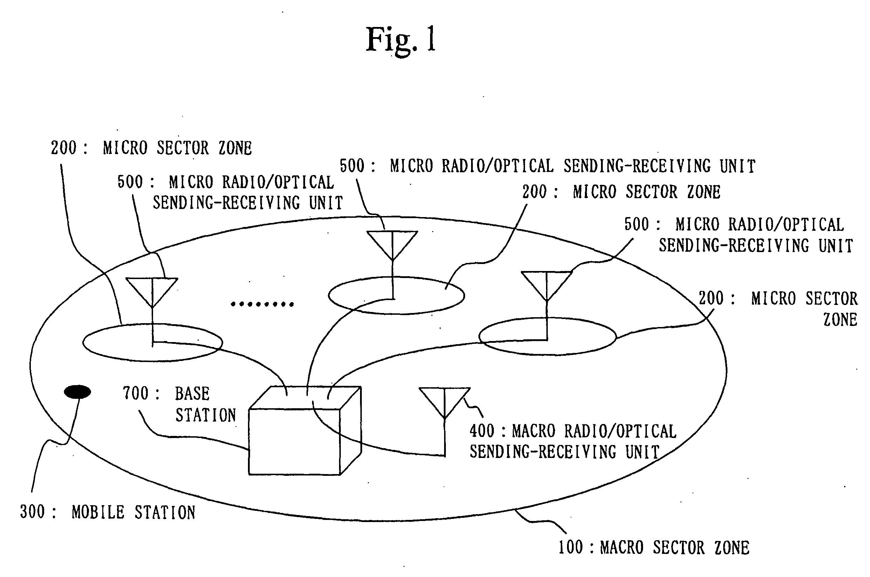

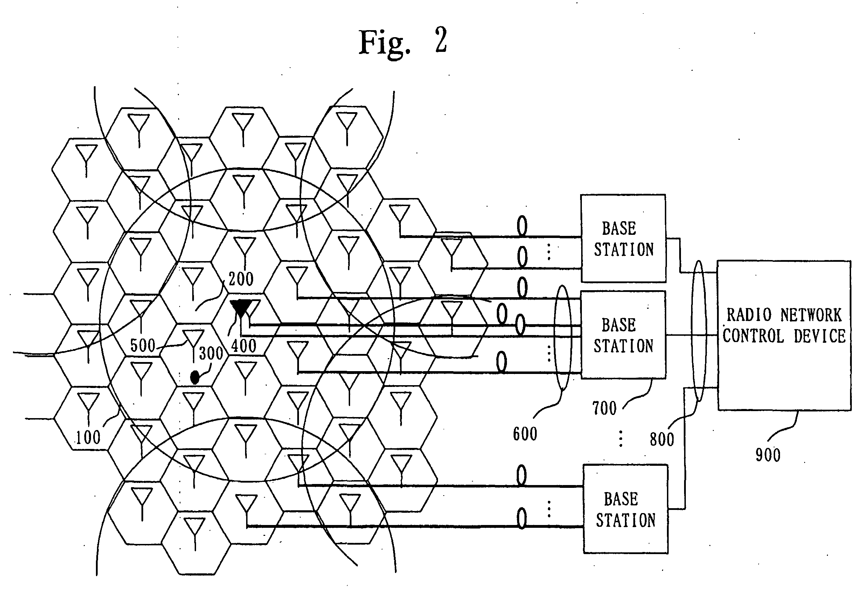

An operation of this embodiment according to CDMA method is explained. At first, a conceptual diagram in this embodiment is illustrated in Fig. 1, and a concrete diagram is illustrated in Fig. 2. A macro sector zone 100 is an area where a macro radio/optical sending-receiving unit 400 and a mobile station 300 which are illustrated can communicate by radio. The macro radio/optical sending-receiving unit 400 is an example of a macro radio communication unit. A micro sector zone 200 is an area where a micro radio/optical sending-receiving unit 500 and the mobile station 300 which are illustrated can communicate by radio. The micro radio/optical sending-receiving unit 500 is an example of a micro radio communication unit. The macro radio/optical sending-receiving unit 400 and the micro radio/optical sending-receiving unit 500 are communication units including antennas as illustrated in Figs. 1 and 2. They communicate with the mobile station 300 via the antenna. The micro sector zone 200 which is a radio communication area of the micro radio/optical sending-receiving unit 500 is overlaid with the macro sector zone 100 which is the radio communication area of the macro radio/optical sending-receiving unit 400. The micro sector zone 200 is an area which is one or more existing in the macro sector zone 100. The micro sector zone 200 can be scattered in the macro sector zone 100. It is also possible that the micro sector zone 200 is laid in all of the macro sector zone 100 as illustrated in Fig. 2. Further, it is not necessary that a number of the antenna in each of the sector zones 100 and 200 is one, and it can be two or more. Further, the micro radio/optical sending-receiving unit 500 which can communicate by radio with the mobile station 300 which exists in the micro sector zone 200 and the macro radio/optical sending-receiving unit 400 which can communicate by radio with the mobile station 300 which exists in the macro sector zone 100 are connected to a base station 700 which is used commonly via an optical fiber network 600 as illustrated in Fig. 2. However, an optical transmission device is not limited to the optical fiber network 600. It is sufficient as far as a device can transmit an optical signal, e.g., micro wave, etc. Further, the base station 700 is set in each of macro sector zones.

Next, with reference to Fig. 2, Embodiment 1 is explained in details. As stated above, the macro radio/optical sending-receiving unit 400 is a communication unit for communicating by radio with the mobile station 300 which is located in the macro sector zone 100. The micro radio/optical sending-receiving unit 500 is a communication unit for communicating by radio with the mobile station 300 which is located in the micro sector zone 200. The micro radio/optical sending-receiving unit 500 is set to cover a dead zone and a zone where the traffic is concentrated in the macro sector zone 100 and to increase a capacity of the system by improving the utilization efficiency of the communication channels in providing the micro sector zone by enabling the communication by radio with the mobile station 300 which exists in the micro sector zone 200. In this explanation, a channel is a frequency band which is allocated for a specific purpose. Therefore, a setup channel which is stated later is a frequency band which is initially allocated for communication by radio. The communication channel is a frequency band which is allocated for communication. Therefore, as stated later, a radio network control device 900 allocates a setup channel to a sector zone. For communicating with a plurality of mobile stations 300 in the sector zone after the setup channel is allocated, it becomes possible to communicate by allocating various codes in a same channel to each of the mobile stations 300.

Each of the base stations 700 is connected to the radio network control device 900 via a communication line 800. The communication line 800 is a communication line, e.g., TTC 2M interface (2.048Mbps), T1 interface (1.5 Mbps), etc. for carrying data of a user who owns the mobile station 300 and control data. The radio network control device 900 allocates the setup channel to avoid the interference between the micro sector zones, the interference between the macro sector zones and the interference between the micro sector zone and the macro sector zone. Specifically, the radio network control device 900 allocates an individual setup channel to the macro radio/optical sending-receiving unit 400 and the micro radio/optical sending-receiving unit 500 corresponding to all of the macro sector zones 100 and all of the micro sector zones 200, or allocates a setup channel which has been allocated to another sector zone to the macro radio/optical sending-receiving unit 400 and the micro radio/optical sending-receiving unit 500 repeatedly for utilizing the frequency band effectively as far as quality of a line does not drop by the interference between the sector zones. However, because of an interference problem, the setup channel allocated to the macro radio/optical sending-receiving unit 400 and the setup channel allocated to the micro radio/optical sending-receiving unit 500 which communicates by radio in the micro sector zone 200 with which the macro sector zone 100 which is an area where the macro radio/optical sending-receiving unit 400 communicates is overlaid must differ. Further, in considering the interference between the micro sector zones, different setup channels are allocated to the micro radio/optical sending-receiving units 500 corresponding to adjacent micro sector zones 200.

As stated, in Embodiment 1, the macro sector zone 100 is overlaid with the micro sector zone 200, and the macro radio/optical sending-receiving unit 400 and the micro radio/optical sending-receiving unit 500 which include the communication units including the antennas communicate with the mobile station 300 located in each of sector zones 100 and 200. The macro radio/optical sending-receiving unit 400 which is one or more and the micro radio/optical sending-receiving unit 500 which is one or more for communicating in the area of the macro sector zone 100 and the micro sector zone 200 are connected to the base station 700 which is used commonly via the optical fiber network 600. The base station 700 which is used commonly is set in each of the macro sector zones. Between the base stations, each of the base stations 700 is connected to the radio network control device 900 via the communication line 800 for carrying the user data and the control data which are used for communication with the mobile station 300. The radio network control device 900 allocates an individual setup channel to all of the macro sector zones and the micro sector zones 200, or allocates a setup channel which has been allocated to another sector zone to the macro sector zone 100 and the micro sector zone 200 repeatedly as far as the quality of the line does not drop by the interference. At this time, in considering a drop in the quality of the line due to the interference, it is necessary that the setup channel allocated to the macro sector zone 100 and the setup channel allocated to the micro sector zone 200 with which the macro sector zone 100 is overlaid are different.

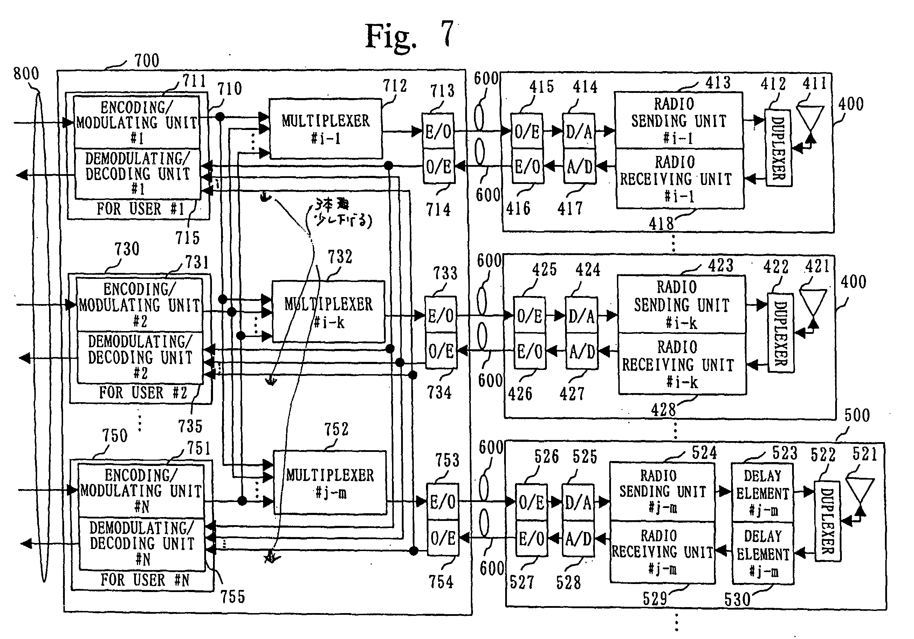

As stated, since the system configuration includes the base station 700 which is used commonly, it becomes unnecessary to set the micro sector base station and the micro sector base station separately, in which a proper place for setting the base station 700 is limited, and to set the micro sector base station additionally for convenience in a zone where there is less traffic and a zone where the traffic is concentrated. Accordingly, it becomes possible to reduce a size, a weight and a price of the communication unit provided in the micro sector zone 200. Further, since the base station 700 which is used commonly is provided, the base station 700 which is used commonly can use information maintained by an encoding/modulating unit provided for each of the users and a demodulating/decoding unit provided for each of the users in the base station 700 which is used commonly illustrated in Fig. 7, which are stated later, usefully and effectively. Therefore, it is possible to minimize control by the radio network control device 900, and it becomes possible that the base station 700 which is used commonly is responsible for controlling to provide an optimal communication environment for a moving speed and a location condition of a user and a data speed of receiving service. Hence, there is an effect of minimizing the interference electric power between the users.

### (2) Detailed operation for registering a location

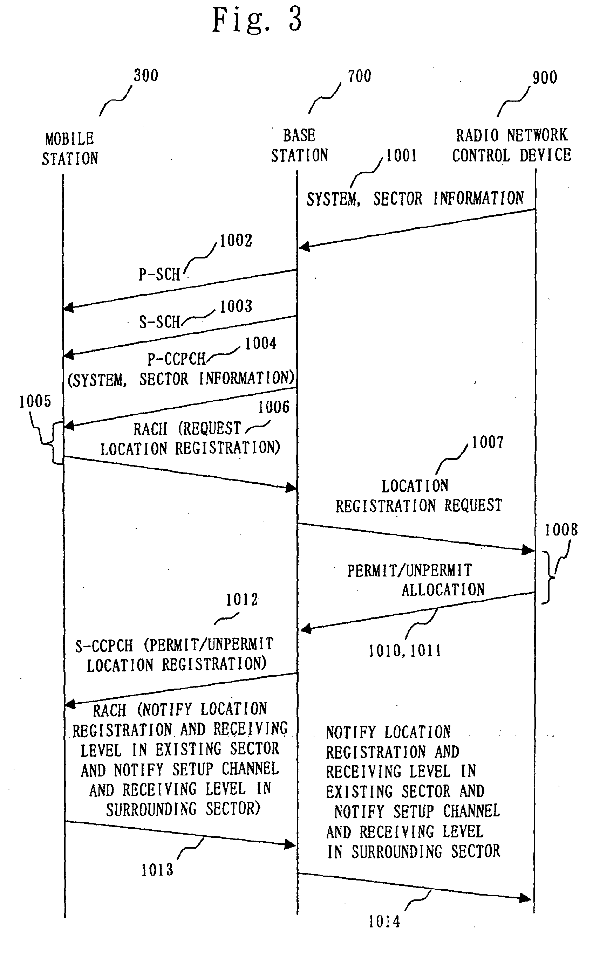

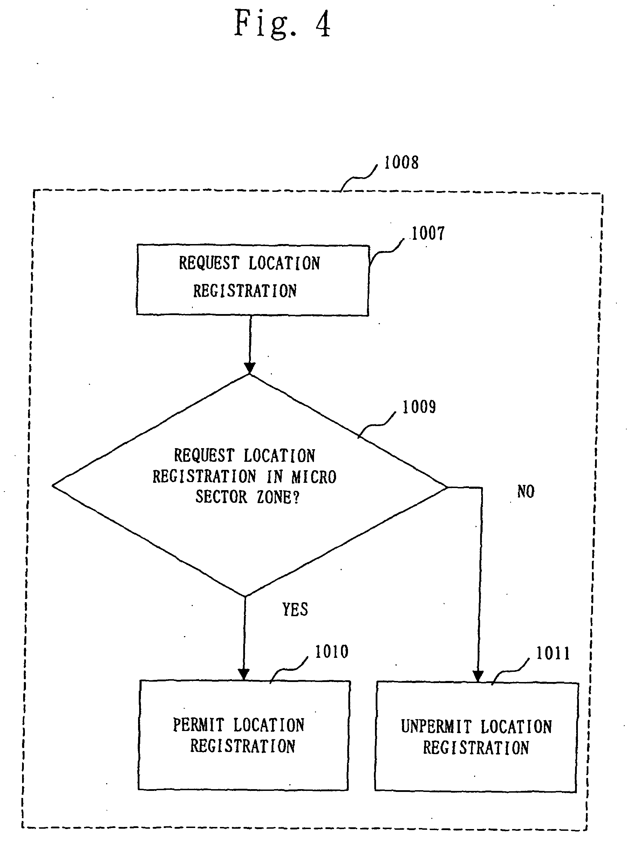

Next, with reference to Figs. 3 and 4, detailed operation for registering the location is explained. In this explanation, an operation in a case of applying to W-CDMA FDD (wideband-Code Devision Multiple Access frequency division bidirection) system regulated in 3GPP (3rd Generation Partnership Project) is explained. However, it is also possible to apply to another system besides 3GPP. The radio network control device 900 transmits system, sector information 1001 to the base station 700 via the communication line 800. Hereinafter, it is assumed that the base station 700 and the radio network control device 900 communicate each other via the communication line 800. The base station 700 transmits P-SCH (Primary-Synchronous CHannel: primary synchronous channel) 1002, S-SCH (Secondary-Synchronous CHannel: secondary synchronous channel) 1003 and P-CCPCH (Primary-Common Control Physical CHannel: primary common-control channel) 1004 which has system, sector information to the air (space). The mobile station 300 scans and selects a setup channel of the sector zone, of which electric power is the highest, based on these signals 1002-1004. After supplementing synchronization (1005), registration of the location is requested to the radio network control device 900 via the base station 700 using RACH (Random Access Channel: physical random access channel) 1006. The radio network control device 900 which has received a location registration request 1007 via the base station 700 distinguishes and judges if registration of the location in the micro sector zone 200 is requested by the mobile station 300 in a flow of location registration permission judgement 1008 illustrated in Fig. 4 (1009). When registration of the location in the micro sector zone 200 is requested, the registration of the location is permitted, and location registration permission is sent to the base station 700 (1010). After the base station 700 transmits this to the mobile station 300 using S-CCPCH (Secondary-Common Control Physical CHannel: secondary common-control channel) 1012 illustrated in Fig. 3, the mobile station 300 notifies the registration of the location and a receiving level in an existing sector zone, and notifies a setup channel and a receiving level in a surrounding sector zone using RACH (physical random access channel) 1013. The radio network control device 900 receives the registration of the location and the receiving level in the existing sector zone and the setup channel and the receiving level in the surrounding sector zone (1014), and registers the location.

When it is not the registration of the location in the micro sector zone 200, i.e., the request is to register the location in the macro sector zone 100, the registration of the location is not permitted (1011) in the flow of the location registration permission judgement in 1008 illustrated in Fig. 4, and this is sent to the base station 700. The base station 700 transmits this to the mobile station 300 using S-CCPCH (secondary common-control channel) 1012. A person who owns the mobile station is not concerned with these location registration requests, and the mobile station 300 requests independently. Therefore, when the registration of the location is not permitted, the mobile station 300 captures P-CCPCH (primary common-control channel) 1004 from another sector, and after supplementing synchronization (1005), the mobile station 300 requests the registration of the location again (1006). Consequently, as far as a place is not an exceptional place where radio waves (transmission signal in 1002 - 1004) from the micro sector zone 200 are blocked by a building, etc., priority is given to the registration of the location in the micro sector zone 200.

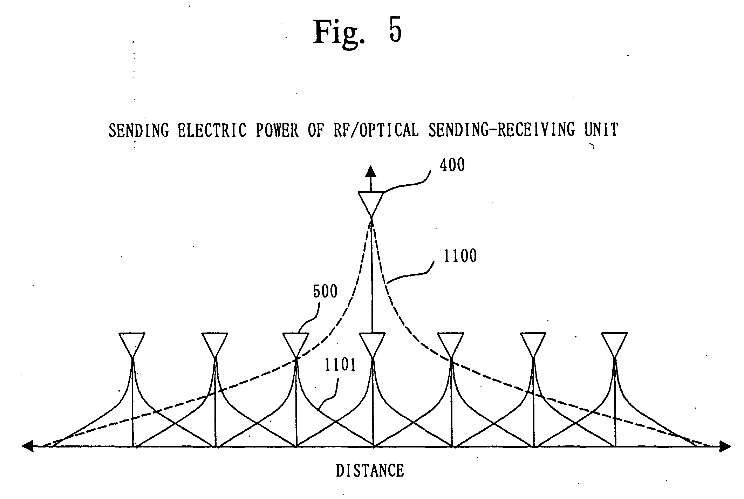

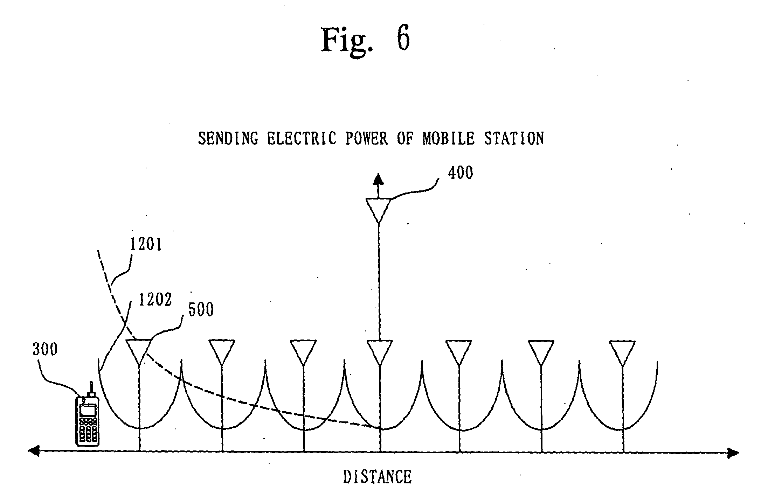

With reference to Figs. 5 and 6, an effect of the above operation related to the registration of the location is explained. At first, an effect of improving performance of receiving at the mobile station 300 is explained. In Fig. 5, a point where a horizontal axis and a vertical axis cross each other shows a location of a communication device set in the macro sector zone 100, including an antenna, which is responsible for communication with the mobile station 300. The horizontal axis shows a distance from the communication device. On the horizontal axis, the macro radio (RF)/optical sending-receiving unit 400 as the communication device set in the macro sector zone 100, including the antenna, and the micro radio (RF)/optical sending-receiving unit 500 as a communication device set in the micro sector zone 200, including the antenna are shown. The vertical axis shows sending electric power of the macro radio (RF)/optical sending-receiving unit 400 and the micro radio (RF)/optical sending-receiving unit 500. In 1100, the sending electric power from the macro radio/optical sending-receiving unit 400 which is set in the macro sector zone 100 attenuates due to radio wave propagation loss according to a distance of the mobile station 300. Meanwhile, in 1101, the sending electric power from the micro radio/optical sending-receiving unit 500 which is set in each of the micro sector zones 200 attenuates due to propagation loss according to the distance of the mobile station 300. As shown in Fig. 5, the sending electric power 1100 from the macro radio/optical sending-receiving unit 400 set in the macro sector zone 100 is a high sending output so that a sending signal can reach the mobile station 300 at an end of the zone. In this time, it can be known that when the mobile station 300 exists in the micro sector zone 200 which is closer in distance to the macro radio/optical sending-receiving unit 400 located at a center of the macro sector zone 100, the quality of the communication drops more due to the interference caused by the sending electric power 1100 of the macro radio/optical sending-receiving unit 400 in the CDMA method in which a same frequency is used for communicating by radio with the macro sector zone 100 and communicating by radio with the micro sector zone 200. Therefore, in the location registration request in this embodiment, the radio network control device 900 performs the registration of the location so that the mobile station 300 communicates with the micro radio/optical sending-receiving unit 500 in the micro sector zone 200. Accordingly, there is an effect of preventing the interference in the mobile station 300. Hence, it is possible to improve the performance of receiving at the mobile station 300 which exists in each of sector zones by an effect of minimizing 1100 and giving priority to transmission of 1101 in the air as shown in Fig. 5.

Next, with reference to Fig. 6, an effect of improving performance of receiving at the base station 700 is explained. The mobile station 300 is located at an end of the macro sector zone 100. The mobile station 300 communicates with the macro radio/optical sending-receiving unit 400 which covers the macro sector zone 100. Since the sending electric power of the mobile station 300 is controlled so that electric power received at the macro radio/optical sending-receiving unit 400 in the macro sector zone 100 which is far becomes at desired receiving sensitivity, the sending electric power of the mobile station 300 has distance vs. sending electric power characteristics as shown in 1201. Meanwhile, the sending electric power of the mobile station 300 which exists in each of the micro sector zones 200 is kept lower as it exists in the micro sector zone 200. The sending electric power of the mobile station 300 has distance vs. sending electric power characteristics as shown in 1202. Therefore, there is more interference during communication by radio caused by the micro radio/optical sending-receiving unit 500 in the micro sector zone 200 with which an end of the macro sector zone 100 is overlaid, and the performance of receiving at the mobile station 300 which exists in its own sector zone 200 drops. However, in the operation for registering the location according to this embodiment, the radio network control device 900 performs the registration of the location in giving priority to the communication of the mobile station 300 with the micro radio/optical sending-receiving unit 500 in the micro sector zone 200. Therefore, there is an effect that the interference of the mobile station 300 at the end of the macro sector zone 100 is prevented. Hence, it is possible to improve the performance of receiving from the mobile station 300 in each of the sector zones by an effect of minimizing 1201 and giving priority to transmission of 1202 in the air as shown in Fig. 6.

As stated, in Embodiment 1, the radio network control device 900 sends the system, sector information to the base station 700 via the communication line 800, and the base station 700 sends P-SCH (primary synchronous channel), S-SCH (secondary synchronous channel) and P-CCPCH (primary common-control channel) to the air. The mobile station 300 scans and selects a setup channel of the sector of which electric power is the highest using these. After supplementing synchronization, the mobile station 300 sends the location registration request to the radio network control device 900 via the base station 700 using RACH (random access channel). The radio network control device 900 distinguishes and judges if the mobile station 300 has requested location registration allocation to the micro sector zone 200. If the concerning mobile station 300 has requested the location registration allocation to the micro sector zone 200, the radio network control device 900 judges that the registration of the location is permitted. Then, the radio network control device 900 sends location registration permission information to the base station 700, and the base station 700 transmits the location registration permission to the concerning mobile station 300 using S-CCPCH (secondary common-control channel). After the concerning mobile station 300 receives the S-CCPCH, the mobile station 300 notifies the registration of the location and the receiving level in the existing sector and notifies the setup channel and the receiving level in the surrounding sector zone again using RACH. Meanwhile, when the radio network control device 900 distinguishes and judges if the concerning mobile station 300 has requested the location registration allocation to the micro sector zone 200, if the concerning mobile station 300 has requested the location registration allocation to the macro sector zone 100, the radio network control device 900 does not permit the registration of the location. The radio network control device 900 sends location registration unpermission information to the base station 700, and the base station 700 transmits the location registration unpermission to the mobile station 300 using S-CCPCH (secondary common-control channel). After the mobile station 300 receives the S-CCPCH and recognizes the location registration unpermission, the mobile station 300 scans and selects another setup channel, supplements synchronization, and requests the registration of the location using RACH (random access channel) again. This kind of operation algorithm for registering the location is provided. Therefore, priority is given to the registration of the location by the mobile station 300 for the micro sector zone 200 with which the macro sector zone 100 is overlaid. By minimizing the sending electric power from the mobile station 300 and the base station 700 immediately after calling and being called, consumption of the electric power can be suppressed. Further, there is an effect of minimizing the interference electric power between the users.

### (3) Flow of electric signals in the macro radio/optical sending-receiving unit, the micro radio/optical sending-receiving unit, and the base station which is used commonly.

Next, Fig. 7 illustrates a configuration of the macro radio/optical sending-receiving unit 400, the micro radio/optical sending-receiving unit 500, the optical fiber network 600, and the base station 700 which is used commonly. In Fig. 7, #i indicates the i-th macro sector zone 100, and #j indicates the j-th micro sector zone 200. Since the base station 700 is set in each of the macro sector zones, it is possible to realize a configuration including one base station 700 for the i-th macro sector zone 100 and one base station 700 for the plurality of micro sector zones 200 instead of the j-th micro sector zone 200 as illustrated in Fig. 7. In Fig. 7, the macro radio/optical sending-receiving unit 400 illustrated in an upper right end and an E/O (Electrical/optical) converter 713 (indicating electrical/optical converter) or an O/E (Optical/electrical) converter 714 (indicating optical/electrical converter) in the base station 700 connected the macro radio/optical sending-receiving unit 400 via the optical fiber network 600 and a multiplexer 712 connected to the E/O converter 713 configure one antenna branch. Similarly, in Fig. 7, the macro radio/optical sending-receiving unit 400 illustrated second from the upper right end and an E/O converter 733 or an O/E converter 734 in the base station 700 connected the macro radio/optical sending-receiving unit 400 via the optical fiber network 600 and a multiplexer 732 connected to the E/O converter 733 configure one antenna branch. Further, the micro radio/optical sending-receiving unit 500 illustrated in a lower right end and an E/O converter 753 or an O/E converter 754 in the base station 700 connected the micro radio/optical sending-receiving unit 500 via the optical fiber network 600 and a multiplexer 752 connected to the E/O converter 753 configure one antenna branch. As stated, the antenna branch means a group of device including an antenna and radio units hanging from the antenna. Therefore, antenna branch #i-1 means that it belongs to first antenna branch which is used for communication to the i-th macro sector zone 100. Further, a number of the antenna which is used for the communication to the i-th macro sector zone 100 is not always one. Therefore, since a number of the antenna branch which exists is same as a number of the antenna, the number of the antenna branch which is used for the communication to the i-th macro sector zone 100 is not always one. It is also same for the communication to the micro sector zone 200. Therefore, even though only the antenna branch #i-1, antenna branch #i-k antenna branch #j-m are illustrated in Fig. 7, actually antenna branches in a same number with antennas used for communication to each of the sector zones are hanging from the base station. Further, similarly, even though only one macro radio/optical sending-receiving unit 400 is illustrated in one macro sector zone 100 in Figs. 1 and 2, a number of the macro radio/optical sending-receiving unit 400 which exists in one macro sector zone 100 is not always one. The macro radio/optical sending-receiving unit 400 in a same number with the antenna used in communication of the i-th macro sector zone 100 is necessary. In Fig. 7, k (k≧2) number of the macro radio/optical sending-receiving units 400 are necessary. It is also same for the micro radio/optical sending-receiving unit 500. For example, when there are three micro sector zones 200 which are areas for communicating by radio with one base station 700 and four antennas are necessary for communicating by radio with each of the zones, there are 12 antenna branches hanging from the base station 700. Therefore, 12 micro radio/optical sending-receiving units 500 are necessary. When the micro sector zone 200 which is an area for communicating by radio with one base station 700 is only the j-th micro sector zone 200 and there are m (m≧1) number of antennas in the j-th micro sector zone 200, m number of micro radio/optical sending-receiving units 500 are necessary.

A flow of an electric signal in a sending system illustrated in Fig. 7 is explained. A signal sent from the radio network control device 900 (the radio network control device 900 is not illustrated) via the communication line 800 is sent to an encoding/modulating unit for a user to be communicated with by radio among an encoding/modulating unit 711 for user (mobile station) #1, an encoding/modulating unit 731 for user #2, ···, an encoding/modulating unit 751 for user #N in the base station 700. For example, for user #1, the signal is sent to an encoding/modulating unit 711 for the user #1 in the base station 700, and the signal is modulated after encoding for error protection. Similarly, in the encoding/modulating unit 731, ···, encoding/modulating unit 751 for other users #2-#N (N≧2) supported by the base station 700, data of each user obtained via the communication line 800 is modulated after encoding for error protection. Therefore, in a case of this embodiment, the encoding/modulating unit can determine a number of circuits for each of the users. However, it is not necessary that the encoding/modulating unit determines the number of circuits for each of the users. It is sufficient only if a number of the encoding/modulating unit is an arbitrary even number. A modulation signal converted by the encoding/modulating unit for the user #1-#N can be sent to an arbitrary multiplexer in the macro sector zone 100 or the micro sector zone 200, e.g., a multiplexer 712 (#i-1) in the first antenna branch in the i-th macro sector zone 100-the multiplexer 732 (#i-k) in the k-th antenna branch in the i-th macro sector zone 100 and the multiplexer 752 (#j-m) in the m-th antenna branch in the j-th micro sector zone 200.

The encoding/modulating unit (711, 731, ···, 751) provided for each of the users selects the sector zone in which a modulation signal is sent from the encoding/modulating unit to an antenna branch.

The selected multiplexer (712, 732, ···, 752) multiplexes digital base band modulation signals sent from a plurality of users. Then, the E/O converter (713, 733, ···, 753) converts a digital base band signal which is an electric signal into an optical signal, and the concerning optical signal is sent to the arbitrary macro radio/optical sending-receiving unit 400 or micro radio/optical sending-receiving unit 500 connected to the optical fiber network 600 via the optical fiber network 600. When the optical signal has been sent to the macro radio/optical sending-receiving unit 400 in the first antenna branch (#i-1) located in the i-th macro sector zone 100 and the k-th antenna branch (#i-k) located in the i-th macro sector zone 100 via the optical fiber network 600, each of optical signals is converted into the digital base band signal which is an electric signal by an O/E converter 415 and an O/E converter 425, and the concerning digital base band signal is sent to a D/A (Digital/Analog) converter 414 (indicating digital /analog converter) and a D/A converter 424 respectively. The D/A converter 414 and the D/A converter 424 convert the digital base band signal into an analog base band signal, and the concerning analog base band signal is input to a radio sending unit 413 and a radio sending unit 423. The radio sending unit 413 and the radio sending unit 423 modulate the analog base band signal orthogonally by an orthogonal modulator, up-convert by a mixer, amplify the sending signal by an amplifier, and limit band by the filter. Then, a high frequency sending signal to the mobile station 300 which exists in the macro sector zone 100 is sent to the air via a duplexer 412 and a duplexer 422, and an antenna 411 and an antenna 421.

Similarly, when an optical signal connected to the optical fiber network 600 is sent to the micro radio/optical sending-receiving unit 500 of the m-th antenna branch (#j-m) located in the j-th micro sector zone 200 via the optical fiber network 600, the optical signal is converted into the digital base band signal which is an electric signal by an O/E converter 526, and the concerning digital base band signal is sent to a D/A converter 525. The D/A converter 525 converts the digital base band signal into an analog base band signal, and the concerning analog base band signal is input to a radio sending unit 524. The radio sending unit 524 modulates the analog base band signal orthogonally by the orthogonal modulator, up-converts by the mixer, amplifies by the amplifier, and limits band by the filter. Then, a high frequency sending signal to the user who exists in the micro sector zone 200 is sent to the air via a duplexer 522 and an antenna 521. However, when a radius of a zone in which communication by radio is possible is very small and a difference in time between a direct wave which is sent to the mobile station 300 owned by the user and a delay wave which is a radio wave propagated by being reflected by a building, etc. is too small, it becomes difficult to separate paths (separate the direct wave and the delay wave), and there is a case where a big receiving effect by RAKE can not be realized. In such a small sector zone, a delay element 523 (#j-m) is set in advance as illustrated in Fig. 7 to give an appropriate difference in time between the direct wave and the delay wave. Accordingly, the paths can be separated by a receiving demodulating unit in a side of the mobile station 300, and a receiving effect by RAKE can be realized. The receiving effect by RAKE is an effect of increasing a received signal (improving demodulation performance) by synthesizing in combining phase differences of the direct wave and the delay wave during communication between the mobile station 300 and the base station 700.

As stated, in a configuration of Embodiment 1, the signal sent from the radio network control device 900 via the communication line 800 is encoded by the encoding unit provided for each of the users for error protection, modulated to the digital base band signal by the modulator, and connected to the multiplexer provided in each of antenna branches for the macro sector zone 100 or the micro sector zone 200. The encoding/modulating unit (711, 731, ···, 751) provided for each of the users can select an antenna branch in which the digital base band signal of each of the users is sent to a multiplexer. In the macro sector zone 100 or the micro sector zone 200, the digital base band signal can be sent to the multiplexer (712, 732, ···, 752) in an arbitrary antenna branch in an arbitrary sector zone. The multiplexer multiplexes digital base band signals of a plurality of users. Then, the E/O converter converts a digital base band signal which is an electric signal into an optical signal, and the optical signal is sent to the macro radio/optical sending-receiving unit 400 and the micro radio/optical sending-receiving unit 500 via the optical fiber network 600. The arbitrary radio/optical sending-receiving unit converts the optical signal into the digital base band signal by the O/E converter (415, 425, ···, 526), converts the digital base band signal into an analog base band signal by the D/A converter (414, 424, ···, 525), and inputs the analog base band signal to the radio sending unit (413, 423, ···, 524). The radio sending unit modulates the input analog base band signal orthogonally by the orthogonal modulator, up-converts to a high frequency signal by the mixer, amplifies the high frequency sending signal by the amplifier, and limits band by the filter. Then, a high frequency signal is sent to the user who exists in the macro sector zone 100 or the user who exists in the micro sector zone 200 with which the macro sector zone 100 is overlaid to the air via the duplexer (412, 422, ···, 522) and the antenna (411, 421, ···, 521). Accordingly, because of the configuration which includes the base station 700 which is used commonly, unlike a case of setting the macro sector base station and the micro sector base station separately in each of the sector zones, it is possible to provide the encoding/modulating unit for each of the users in one base station. Because of the configuration including the base station 700 which is used commonly, the base station 700 which is used commonly can use information maintained by the encoding/modulating unit which exists for each of the users usefully and effectively. Therefore, the control by the radio network control device 900 can be minimized, and the base station 700 which is used commonly can be responsible for controlling to offer an optimal communication environment according to a moving speed and location condition of a user, and data speed for receiving the service. Hence, the interference electric power between the users can be minimized.

Further, in processing a high frequency signal sent to the mobile station 300 which exists in the micro sector zone 200, since the delay element 523 is inserted for each of the antenna branches when a radius of the micro sector zone 200 is small in this configuration, there is an effect that it becomes possible to separate the paths and receive by RAKE at the mobile station 300 even in the micro sector zone 200 where it is difficult to separate the paths.

### (4) A flow of an electric signal in a receiving system in the macro radio/optical sending-receiving unit, micro radio/optical sending-receiving unit, and the base station which is used commonly.

Next, with reference to Fig. 7, a flow of the signal in the receiving system is explained. A high frequency sending signal sent from the mobile station 300 owned by the user who exists in the i-th macro sector zone 100 is received by the radio/optical sending-receiving unit 400 in the first antenna branch (#i-1) in the i-th macro sector zone 100-the k-th antenna branch (#i-k) in the i-th macro sector zone 100 respectively. As illustrated in Fig. 7, in the antenna branch (#i-1), a path of the received signal is the antenna 411, the duplexer 412, and a radio receiving unit 418 (#i-1). In the antenna branch (#i-k), a path of the received signal is the antenna 421, the duplexer 422, and a radio receiving unit 428 (#i-k). The radio receiving unit 418 and the radio receiving unit 428 obtain an analog base band signal by limiting the band by the filter, amplifying the received signal by the amplifier, down-converting by the mixer, and demodulating orthogonally by the orthogonal demodulator. The analog base band signal is converted into the digital base band signal by an A/D converter 417 (indicating analog/digital converter) and an A/D converter 427. The digital base band signal is converted from the digital base band which is the electric signal into the optical signal by an E/O converter 416 and an E/O converter 426, and received by the O/E converter 714 and the O/E converter 734 in the base station 700 via the optical fiber network 600. The O/E converter 714 and the O/E converter 734 convert the optical signal into the digital base band signal which is the electric signal. The signal is demodulated by a demodulating/decoding unit (715, 735, ···, 755) for the concerning user among the modulating - demodulating / encoding - decoding units (710, 730, ···, 750) for the user, decoded with error correction, and sent to the radio network control device 900 via the communication line 800.

Meanwhile, among the plurality of antenna branches located in the j-th micro sector zone 200, the m-th antenna branch (#j-m) receives the sending signal from the mobile station 300 owned by the user who exists in the micro sector zone 200 via the antenna 521, the duplexer 522, a radio receiving unit 529 (#j-m), an A/D converter 528, and an E/O converter 527 in the micro radio/optical sending-receiving unit 500. Like in the sending system, when it is difficult to separate the paths and it is impossible to realize the receiving effect by RAKE as the micro sector zone 200 is very narrow, as illustrate in drawing, a delay element 530 (#j-m) is inserted between the duplexer 522 and the radio receiving unit 529 in the m-th antenna branch (#j-m) located in the j-th micro sector zone 200. Consequently, it becomes possible to separate the paths surely by the demodulating unit in the demodulating/decoding unit 755 which is stated later, and the receiving effect by RAKE can be realized. A flow of processing the signal following the radio receiving unit 529 is same as the flow of receiving in the macro sector zone 100.

As stated, in Embodiment 1, the high frequency signal sent from the mobile station 300 which exists in the macro sector zone 100 or the micro sector zone 200 with which the macro sector zone 100 is overlaid via the air is received by the macro radio/optical sending-receiving unit 400 or the micro radio/optical sending-receiving unit 500 in each of antenna branches including one system or a plurality of systems in each of the sector zones. Then, after the high frequency signal received by the macro radio/optical sending-receiving unit 400 or the micro radio/optical sending-receiving unit 500 is sent via the antenna (411, 421, ···, 521) and the duplexer (412, 422, ···, 522), the analog base band signal is obtained by limiting the band by the filter of the radio receiver (418, 428, ···, 529), amplifying the received signal by the amplifier, down-converting by the mixer, and demodulating orthogonally by the orthogonal demodulator. The analog base band signal is converted into the digital base band signal which is the electric signal by the A/D converter (417, 427, ···, 528), then converted into the optical signal by the E/O converter (416, 426, ···, 527). Then, the signal is transmitted to the O/E converter (714, 734, ···, 754) in each of the antenna branches in the base station 700 which is used commonly for the macro sector zone 100 and the micro sector zone 200 via the optical fiber network 600. In the O/E converter, the optical signal is converted into the digital base band signal which is the electric signal, and input to the demodulating/decoding unit (715, 735, ···, 755) provided for each of the users. Since the demodulating/decoding unit is connected to the multiplexer of all of the antenna branches, the digital base band signal of all of the antenna branches can be input to some demodulating/decoding unit. In the demodulating/decoding unit, after the digital base band signal of a plurality of antenna branches is selected among the digital base band signals of all of the antenna branches, the signal is demodulated by the demodulating unit, decoded with error correction by the decoding unit, and sent to the radio network control device 900 via the communication line 800. Accordingly, because of the configuration which includes the base station 700 which is used commonly, unlike a case of setting the macro sector base station and the micro sector base station separately for each of the sector zones, it is possible to provide the encoding/modulating unit for each of the users in one base station 700. Because of the configuration including the base station 700 which is used commonly, the base station 700 which is used commonly can use information maintained by the demodulating/decoding unit provided for each of the users usefully and effectively. Therefore, the control by the radio network control device 900 can be minimized, and the base station 700 which is used commonly can be responsible for controlling to offer an optimal communication environment according to a moving speed and location condition of the user, and data speed for receiving the service. Hence, the interference electric power between the users can be minimized.

Further, in processing a high frequency signal sent to the user who exists in the micro sector zone 200, since the delay element 530 is inserted for each of the antenna branches when a radius of the micro sector zone 200 is small in this configuration, it becomes possible to separate the paths and receive by RAKE at the base station 700 even in the micro sector zone 200 where it is difficult to separate the paths.

### (5) A procedure in processing a signal in the sending system in the base station

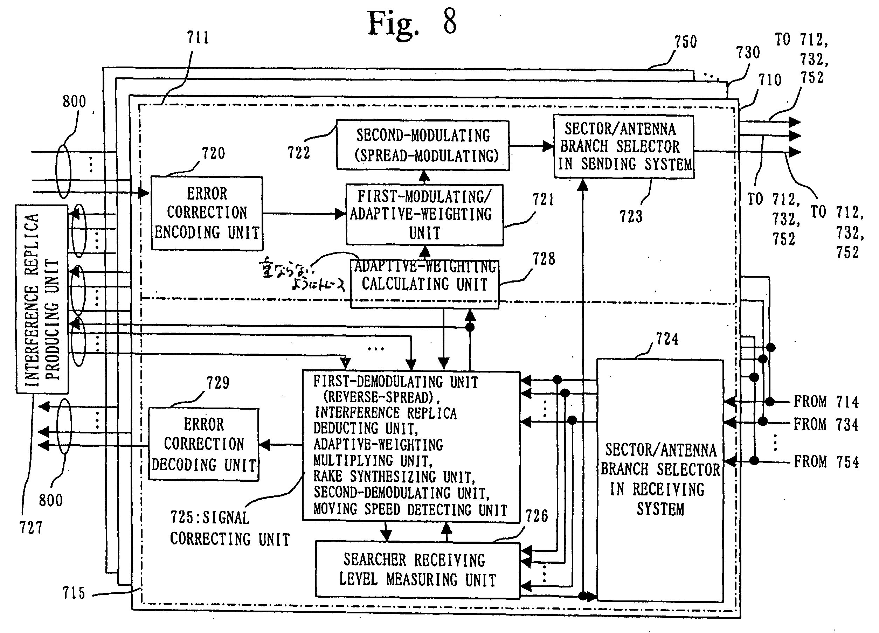

Next, with reference to Fig. 8, in the procedure in processing the signal in the sending system, the encoding/modulating unit (711, 731, ···, 751) is explained.

In the encoding/modulating unit, an error correction encoding unit 720 encodes the sending data to the user #1 for error protection, which was input via the communication line 800, and obtains encoded data. Modulated data are produced in the process of first-modulating the encoded data in a first-modulating/adaptive-weighting unit 721. A first-modulating/adaptive-weighting unit 721 weights adaptively an amplitude and a phase of concerning first-modulated data based on weighting coefficient calculated by an adaptive-weighting calculating unit 728 for each of the first antenna branch (#i-1) located in the i-th macro sector zone 100 - the k-th antenna branch (#i-k) located in the i-th macro sector zone 100. Next, modulated data weighted is spread-modulated for each of the antenna branches by second-modulating (spread-modulating) 722. The digital base band signal produced for each of the antenna branches is input to a sector/antenna branch selector in sending system 723. A searcher receiving level measuring unit 726 selects a transmission path based on selection of an effective path from each of the antenna branches and measurement of a receiving level (receiving electric power amount), and sends it to all of the first antenna branch (#i-1) in the i-th macro sector zone-the k-th antenna branch (#i-k) in the i-th macro sector zone which are located in the macro sector zone 100 in which a transmission user exists or some of the first antenna branch (#i-1) in the i-th macro sector zone-the k-th antenna branch (#i-k) in the i-th macro sector zone. The selection of the effective path is to select n number of arbitrary impulse response based on a size of an electric power amount among many impulse responses using a measuring result of time vs. electric power amount (impulse response) of a direct wave and some delay waves. Specifically, the searcher receiving level measuring unit 726 selects the effective path by measuring the electric power amount and the delay time of n number of peak signal which is the maximum in a multi path including a direct wave and a delay wave, and averaging n number of peak electric power. Using the sector/antenna branch selector in sending system 723, the same concerning demodulating/encoding - decoding unit (710, 730, ···, 750) becomes able to handle between zones where the macro sector zone 100 is overlaid with the micro sector zone 200 wherever the user moves. The stated procedure in processing the signal is similarly performed for a user who exists in the micro sector zone 200.

As stated, in the radio communication base station system according to this embodiment, an encoding unit of the encoding/modulating unit 711 encodes sending data of the user which has been sent from the radio network control device 900 via the communication line 800 and outputs encoded data, a modulating unit produces modulated data by first-modulating the encoded data, and weights a phase and an amplitude of first-modulated data adaptively for a number of the antenna branches, i.e., each of the antenna branches, provided in the sector zone where the user exists using an adaptive weighting coefficient resolved by the adaptive weighting calculating unit 728, the second-modulating unit spread-modulates first-modulated data after weighting to produce spread-modulated data, and the sector/antenna branch selector in sending system 723 can select the antenna branch in an arbitrary plurality of sectors among all of the antenna branches in all of the sector zones connected to the base station 700 and send spread-modulated data to the selected antenna branch. Therefore, a resource of the coding/modulating unit which exists for each of the users can be utilized usefully and effectively. Further, since the base station 700 which is used commonly is set instead of setting the macro sector base station and the micro sector base station separately, it is possible to select an optimal operation for reducing the interference according to a moving speed and a location condition of the user and a data speed of receiving the service at a time of sending from the base station 700 to the mobile station 300 only by the base station 700 which is used commonly without control by the radio network control device 900. Specifically, there is a significant effect that the plurality of base stations 700 can perform the optimal operation for reducing the interference independently in parallel without using control time of the radio network control device 900.

### (6) A procedure in processing a signal in a receiving system in the base station

Next, with reference to Fig. 8, the procedure in processing the signal in the receiving system is explained. A sector/antenna branch selector in receiving system 724 is configured so that the digital base band signal from all of the antenna branches in all of the sector zones connected to the base station 700 can be received. In the sector/antenna branch selector in receiving system 724, an antenna branch which receives an effective path in the i-th macro sector zone 100 in which the user #1 exists is selected among the first antenna branch (#i-1) in the i-th macro sector zone 100-the k-th antenna branch (#i-k) in the i-th macro sector zone 100, and input to a searcher receiving level measuring unit 726 and a first-demodulating unit (inverse-spreading) in a signal correcting unit 725. For the selected received signal, the search receiving level measuring unit 726 selects an effective path based on measurement of delay profile. This selection information is used for selecting a branch in the sector/antenna branch selector in receiving system 724 as well as in the sector/antenna branch selector in sending system 723. Based on timing of the selected effective path and estimated transmission path characteristics for estimating transmission of the received signal, after first-demodulation (inverse-spreading) is performed for each of paths, transmission path is supplemented, and a reproduction signal is obtained. The reproduction signal, the estimated transmission path characteristics, and a spread code which is a value fixed for each of the users are input to an interference replica producing unit 727 as interference replica production information of concerning user #1. Then, an interference replica of a chip rate for each of the antenna branches is produced, and input to the first-demodulating unit in the signal correcting unit 725 again. Then, an interference replica deducting unit in the signal correcting unit 725 deducts the concerning interference replica from the received signal in each of the antenna branches selected for each of the users. Based on the received signal after deduction and the earlier reproduction signal, first-demodulation (inverse-spreading) is performed for each of the paths, and second-demodulation of the signal which has been RAKE synthesized by a RAKE synthesizing unit in the signal correcting unit 725 is performed by second-demodulating unit in the signal correcting unit 725. For an output signal of inverse-spreading, it is also possible that the adaptive-weighting calculating unit 728 calculates an adaptive-weighting coefficient of amplitude and phase controlling, and the adaptive-weighting multiplying unit in the signal correcting unit 725 performs adaptive-weighting of the output signal which has been inverse-spread using the concerning adaptive-weighting coefficient. Accordingly, it is possible to form an antenna beam which has arbitrary directivity.

An encoded reproduction signal which is output from the second-demodulating unit is input to an error correction demodulating unit 729, and error correction demodulation is performed. A signal after complexing is sent to the radio network control device 900 via the communication line 800 as a reproduction signal received from the user #1.

As stated, in the radio communication base station system according to this embodiment, the demodulating/decoding unit selects a plurality of antenna branches in one or a plurality of sector zones among all of the antenna branches in all of the sector zones using the sector/antenna branch selector in receiving system 724, and inputs this output signal which is a digital base band signal to the searcher receiving level measuring unit 726 and the first-demodulating unit in the signal correcting unit 725. Then, the searcher receiving level measuring unit 726 selects an effective path based on delay profile measurement, and the first-demodulating unit in the signal correcting unit 725 performs inverse-spreading for each of the selected paths in a received timing of signal obtained from the paths, and converts into a symbol rate. At the same time, the search receiving level measuring unit 726 obtains estimated transmission path characteristics for each of the paths based on the delay profile measurement, supplements transmission path based on the estimated transmission path characteristics, and obtains a reproduced symbol. Then, the reproduced symbol, estimated transmission path characteristics and spread code are input to the interference replica producing unit 727 as the interference replica production information of the user. In the interference replica producing unit 725, the interference replica production information of all the users is input, and an interference replica of a chip rate for each of the antenna branches is produced and input to the first-demodulating unit in the signal correcting unit 725 again. Then, the interference replica is deducted from the received signal for each of the antenna branches selected for each of the users, and inverse-spreading is performed again for each of the paths based on this and earlier reproduced symbol. Then by RAKE synthesis, a reproduced symbol is obtained, and second-demodulation is performed. At the same time, for the output signal of inverse-spreading, it is also possible that the adaptive-weighting calculating unit 728 calculates an adaptive-weighting coefficient of amplitude and phase control, and performs adaptive-weighting of the output signal after inverse-spreading using the adaptive-weighting coefficient. Accordingly, an antenna beam which has arbitrary directivity is formed. Further, in this configuration, the first-modulating unit, second-modulating unit and moving speed detecting unit in the signal correcting unit 725 detects a moving speed of a user based on a fluctuation of received signal level of the user, inputs encoded reproduction data which are output from second-modulation to the error correction decoding unit 729, and error correction decoding is performed to obtain reproduced data. Then, the reproduced data are sent to the radio network control device 900 via the communication line 800. Therefore, since the base station 700 which is used commonly is set instead of setting the micro sector base station and the macro sector base station separately, it is possible to provide the demodulating/decoding unit for each of the users in a number of users. Hence, each of the base stations can utilize resources of the demodulating/decoding unit which exists for each of the users usefully and effectively. Further, when the mobile station 300 sends to the base station 700, an optical operation of the interference reduction for eliminating the interference between the macro sector zone 100 and the micro sector zone 200 according to moving speed and a location condition of the user and a data speed of receiving the service can be selected. Specifically, there is a significant effect that the plurality of base stations 700 can perform an optimal operation for reducing the interference in parallel independently for each of the base stations without using control time of the radio network control device 900.

Since the interference replica producing unit 727 illustrated in Fig. 8 is commonly used by all the users of one base station 700, the interference replica producing unit 727 maintains the interference replica production information of all the users. Therefore, the interference replica production information of all the users is input, the interference replica of the chip rate for each of the antenna branches is produced and again input to a first-modulating unit existing for each of the users, and the interference replica is deducted from the received signal for each of the antenna branches selected for each of the users. Because of this configuration, it is possible to add an interference canceller function without much modification from the second-modulating unit in the signal correcting unit 725, which includes an existing matched filter and a RAKE receiving unit. The interference canceller function is a function of deducting a signal of other users for eliminating the interference in a signal of a requesting user among multiplexed received signals of all the users.

As stated, instead of setting the micro sector base station and the macro sector base station separately, the base station 700 which is used commonly is set. Therefore, one interference replica producing unit 727 for all the users of one base station 700 is provided as a common device. Hence, in this configuration, the interference replica production information of all the users can be maintained in the interference replica producing unit 727. Therefore, for example, even when there is the interference among user 1, user 2 and user 3 during communication and an accurate received signal of the user 3 should be extracted, unless the interference replica is deducted, interference component of users 1 and 2 remain in the received signal of the user 3. The signal which is output from the second-modulating unit in the signal correcting unit 725 and input to the error correction decoding unit 729 includes many data errors, and it becomes impossible to restore the signal (received signal) originally sent by the user 3 even by error correction. However, in this embodiment, since the interference replica production information of all the users exists in the interference replica producing unit 727, it is possible to input the interference replica production information of the users 1 and 2. Therefore, there is an effect that the original signal sent by the user 3 can be restored by eliminating the interference by deducting the signal of the users 1 and 2 from the multiplexed received signal of the user 3 based on the information, performing RAKE synthesis of the output signal after eliminating in the second-demodulating unit in the signal correcting unit 725, and performing error correction of the output signal after synthesis in the error correction decoding unit 729.

### (7) An operation for reducing the interference in the base station and the radio network control device

Next, with reference to Fig. 7 - Fig. 9, the operation for reducing the interference in the base station 700 and the radio network control device 900 in communication with the mobile station 300 using an individual channel after calling and being called in the radio communication base station system of mobile communication using the above-stated configuration is explained.

### (7-1) The operation for reducing the interference in the radio network control device 900

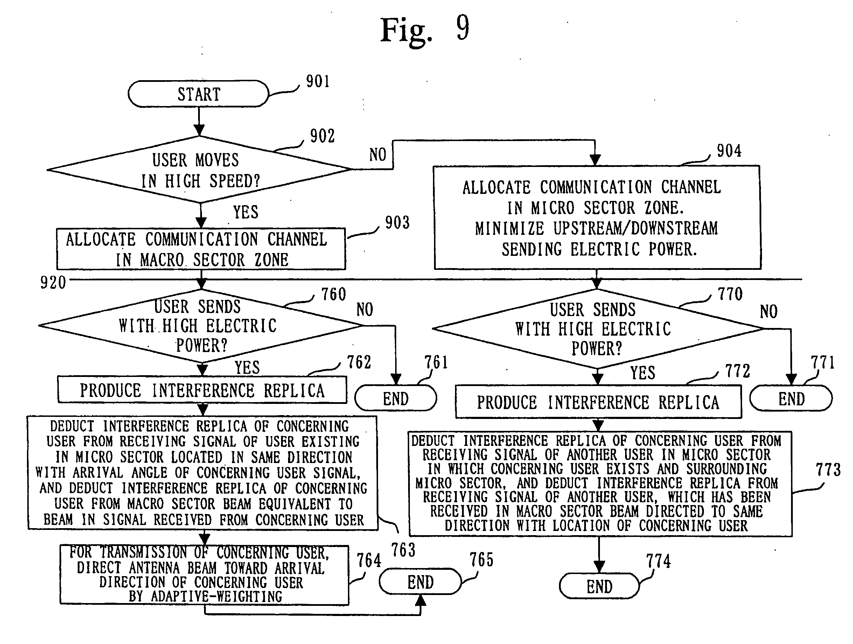

At first, the operation for reducing the interference in the radio network control device 900 is explained. In calling and being called, the communication by radio with the mobile station 300 is started using an individual channel. This is START (901) in Fig. 9. The moving speed detecting unit in the signal correcting unit 725 in the demodulating/decoding unit (715, 735, - 755) illustrated in Fig. 8 detects a moving speed of the mobile station 300. The radio network control device 900 compares a predetermined reference moving speed with the moving speed detected by the moving speed detecting unit 725, and distinguishes and judges if the user (mobile station 300) moves in a high speed (902). It is also possible that the radio network control device 900 distinguishes and judges if the user moves in a high speed by measuring a switching cycle of a sector zone due to movement of the mobile station 300 and comparing if the switching cycle is shorter than a predetermined time interval (902). By judging in this way, if the user (mobile station 300) moves in the high speed, the radio network control device 900 instructs the base station 700 to allocate a communication channel to communicate in the macro sector zone (903). Meanwhile, if the user (mobile station 300) does not move in the high speed, the sending electric power for upstream from the mobile station 300 to the base station 700 and the sending electric power for downstream from the base station 700 to the mobile station 300 are minimized. For a purpose of increasing channel capacity in the base station 700, the communication channel is allocated to the base station 700 to communicate in the micro sector zone 200 (904). As stated, in Fig. 9, an upper part from a border line 920 shows a flow of selecting operation methods for eliminating the interference caused by the radio network control device 900.

As stated, in the radio communication base station system in Embodiment 1, when communication using an individual channel is started, the detection result of the moving speed of the mobile station 300 and the reference moving speed predetermined by the radio network control device 900 are compared, and it is distinguished and judged if the user who is communicating moves in the high speed. When it is judged that the user moves in the high speed, the radio network control device 900 allocates the macro sector zone 100 to the mobile station 300. When it is judged that the user does not move in the high speed, the radio network control device 900 allocates the micro sector zone 200 to the mobile station 300. This sector zone allocation algorithm is provided. Therefore, it is possible to allocate optimal sector zone based on the moving speed of the user who owns the mobile station 300 which is communicating.

Specifically, if the radio network control device 900 allocates the communication channel to the micro sector zone 200 even when the user moves in the high speed, after the location is registered, there is a possibility that the user moves from the micro sector zone to which the communication channel is allocated to another micro sector zone 200 in the high speed, and further to the macro sector zone 100 in another base station 700. In this state, the radio network control device 900 needs to perform handover between the macro sector zone 100 and the micro sector zone 200 frequently. Hence, a load on the radio network control device 900 becomes high. Further, it is user who decides timing to call. There is a possibility that the later the user calls after the location is registered, the higher the load on the radio network control device 900 becomes. In this embodiment, there is an effect of reducing the load on the radio network control device 900 by allocating the communication channel to the macro sector zone 100 when the user moves in the high speed. Further, there is an effect of minimizing the sending electric power for upstream (signal sent from the user to the base station 700) and downstream (signal sent from the base station 700 to the user) by allocating the communication channel to the micro sector zone 200 when the user moves in a low speed.

### (7-2) The operation for reducing the interference in the base station 700

Next, in Fig. 9, a lower part from the border line 920 shows a flow of selecting operation methods for eliminating the interference caused by the base station 700. The base station 700 distinguishes based on the receiving electric power of the user if the user who is judged to communicate in the macro sector zone 100 in the stated 903 sends with high electric power (760). When the user receives with high electric power, the user sends with high electric power. It is possible to distinguish using the receiving electric power measured by the searcher receiving level measuring unit 726 if the user sends with high electric power. As another method for distinguishing, the base station 700 compares a spread rate which is a ratio of a spread code determined for the user individually and received signal data with a predetermined reference spread rate. If the spread rate is lower than the reference spread rate, it can be distinguished that the user sends with high electric power. However, any method besides these methods can be used as far as it can be distinguished if the user sends with high electric power.

When it is distinguished that the user does not send with high electric power in these methods, the flow of operation for eliminating the interference is ended (761).

When it is distinguished that the user sends with high electric power, since the sending electric power of the concerning user interferes with other users, the interference replica producing unit 727 produces the interference replica of the concerning user (762). Next, the interference replica deducting unit in the signal correcting unit 725 in Fig. 8 deducts the interference replica of the user who sends with high electric power from the received signal of the other user existing in the micro sector zone 200 located in a same direction with an arrival angle (can be identified from the received signal of the concerning user) of the signal of the user who sends with high electric power (763). The interference replica deducting unit deducts the interference replica of the user who sends with high electric power from a macro sector beam which is equivalent to the beam in the signal received from the user who sends with high electric power (763). Further, for transmission to the user who sends with high electric power, the directivity of the antenna beam is directed to the arrival direction of the user who sends with high electric power by adaptive-weighting of the first-modulation signal by a first-modulating/adaptive-weighting unit 721 in Fig. 8 (764), and the flow of eliminating the interference is ended (765).

Meanwhile, the base station 700 judges if the user who is judged to communicate in the micro sector zone 200 in the above 904 is the user who sends with high electric power in the above methods for distinguishing (770).

When it is identified that the user does not send with high electric power, the flow of eliminating the interference is ended (771).

When it is identified that the user sends with high electric power, the interference replica of the concerning user is produced by the interference replica producing unit 727 (772). Next, the interference replica deducting unit in the signal correcting unit 725 illustrated in Fig. 8 deducts the interference replica of the user who sends with high electric power from the received signal of the other user in the micro sector zone 200 in which the user who sends with high electric power exists and the surrounding micro sector zone 200, and deducts the interference replica of the user who sends with high electric power from the received signal of the other user, which has been received in a macro sector beam directed to a same direction with a location of the user who sends with high electric power (773), and the flow of eliminating the interference is ended (774).

As stated, in the radio communication base station system in Embodiment 1, it is distinguished and judged if the user to whom the macro sector zone 100 is allocated is the user who sends with high electric power. When it is judged as the user who sends with high electric power, the interference replica of the concerning user is produced using the interference replica producing unit 727. The interference replica of the concerning user is deducted from the received signal of the user to whom the micro sector located in the same direction with the arrival angle of the signal of the concerning user is allocated, and the interference replica of the concerning user is deducted from the antenna beam in the macro sector zone 100 having the directivity, in which the signal of the concerning user has been received. Further, for the transmission to the concerning user, the antenna beam of the macro sector zone 100 has the directivity only for the arrival direction of the concerning user in the operation algorithm. Accordingly, there is an effect that an optimal operation for reducing the interference can be selected for eliminating the interference between the macro sector zone 100 and the micro sector zone 200 based on the location of the user who is communicating and a data speed of receiving the service. Specifically, when the radio network control device 900 allocates the communication channel to the macro sector zone 100 as the moving speed of the user is in the high speed, since the antenna beam is not directed to a direction besides the direction of the user who sends with high electric power by directivity control (764 in Fig. 9), there is an effect of preventing the interference in the user in other directions. Meanwhile, the user in the micro sector in the same direction is interfered by the communication by the user who sends with high electric power. Therefore, the interference replica of the user who sends with high electric power is produced by the interference replica producing unit 727, and the interference replica of the user who sends with high electric power is deducted from the signal of the user in the same direction with the arrival angel of the signal of the user who sends with high electric power (763 in Fig. 9). Accordingly, it is possible to eliminate the interference caused by the signal of the user who sends with high electric power from the signal of the user in the same direction with the arrival angle of the user who sends with high electric power. Further, by deducting the interference replica from the received signal of the other user received in the macro sector beam directed to the same direction with the location of the user who sends with high electric power (763 in Fig. 9), it is possible to eliminate the interference caused by the signal of the user who sends with high electric power.

For the user to whom the micro sector zone 200 has been allocated by the radio network control device 900, the base station 700 distinguishes and judges if it is the user who sends with high electric power. When it is judged as the user who sends with high electric power, the interference replica of the concerning user is produced using the interference replica producing unit 727. Then, the interference replica of the concerning user is deducted from the received signal of the other user in the micro sector zone 200 which has been allocated to the concerning user and the surrounding micro sector zone 200, and the interference replica of the concerning user is deducted from the received signal of the other user, which has been received from the macro sector beam directed the same direction with the location of the concerning user. This operation algorithm is provided. Therefore, there is an effect that the optimal operation for reducing the interference can be selected to eliminate the interference between the macro sector zone and the micro sector zone according to the location condition of the user who is communicating and the data speed for receiving the service. Specifically, since the interference replica of the user who sends with high electric power is produced by the interference replica producing unit 727, and the interference replica of the user who sends with high electric power is deducted from the received signal of the other user in the micro sector zone in which the user who sends with high electric power exists and the surrounding micro sector zone (773 in Fig. 9), the interference caused by the signal of the user who sends with high electric power can be eliminated from the signal of the other user in the micro sector zone in which the user who sends with high electric power exists and the surrounding micro sector zone. This effect is especially effective in a case when the user who exists in the micro sector zone 200 is sending the high speed data, e.g., image for upstream and the electric power of the received signal received by the micro radio/optical sending-receiving unit 500 is low because of disturbance by buildings. That is because the sending electric power for upstream of the high speed data, e.g., image is high compared with the low speed data, e.g., voice, and when the receiving electric power received by the micro radio/optical sending-receiving unit 500 is low, the base station 700 instructs the user (mobile station 300) to increase the sending electric power for upstream to maintain receiving sensitivity. Consequently, even though the sending electric power for upstream and downstream is minimized as shown in 904 of Fig. 9, influence of the interference increases. Therefore, in this case, since the interference replica of the user who sends with high electric power is produced by the interference replica producing unit 727, and the interference replica of the user who sends with high electric power is deducted from the received signal of the other user in the micro sector zone in which the user who sends with high electric power exists and the surrounding micro sector zone (773 in Fig. 9), there is a significant effect to realize the optimal operation for reducing the interference as the interference caused by the signal of the user who sends with high electric power is eliminated from the signal of the other user in the micro sector zone in which the user who sends with high electric power exists and the surrounding micro sector zone.

Further, since the interference replica is deducted from the received signal of the other user received in the macro sector beam directed to the same direction with the location of the user who sends with high electric power (773 in Fig. 9), there is an effect of eliminating the interference caused by the signal of the user who sends with high electric power.

### Embodiment 2.

In the radio communication base station system according to Embodiment 2, an adaptive array antenna is provided as an antenna of the macro radio/optical sending-receiving unit 400, and an omni-antenna or a sector antenna is provided as an antenna of the micro radio/optical sending-receiving unit 500. Because of this configuration, directivity of the antenna in the micro radio/optical sending-receiving unit 500 is fixed for beam, however directivity of the antenna in the macro radio/optical sending-receiving unit 400 can follow the movement of the user. The omni-antenna is an antenna of which antenna beam has constant electric power in a 360-degree angle, and the sector antenna is a form in which a service zone is divided into some sectors, and an antenna is provided for each of the sectors. The adaptive array antenna has an effect of reducing the interference electric power between the users as the directivity of the antenna is directed to a target user and the directivity of the antenna is not directed to a user besides the target user.

As stated, since the adaptive array antenna is provided as the antenna of the macro radio/optical sending-receiving unit 400, and the movement of the user is followed by the beam, there is an effect of narrowing an interference range from the macro sector zone 100 to the micro sector zone 200. Further, there is an effect of limiting a range of eliminating the interference using the interference replica only to the micro sector zone 200 which is in the same direction with the beam. Further, since the omni-antenna or the sector antenna is provided as the antenna of the micro radio/optical sending-receiving unit 500, it is possible to concentrate the radio wave in a spot. Hence, there is an effect of limiting the range of eliminating the interference using the interference replica.

### Embodiment 3.

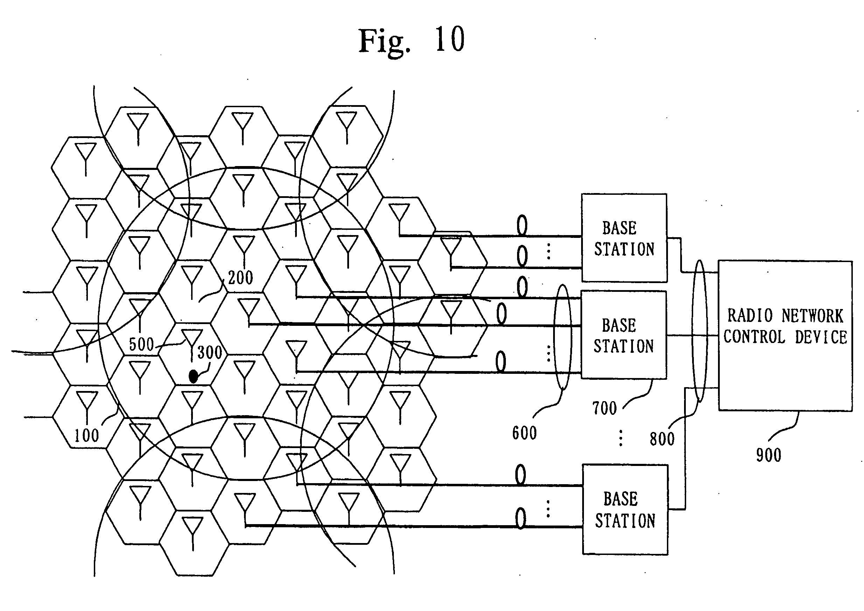

With reference to Fig. 10, Embodiment 3 of this invention is explained. In Fig. 10, same sign is used for an element which has a same function with Fig. 2. In Fig. 10, the micro radio/optical sending-receiving unit 500 including an antenna for communicating by radio with the plurality of micro sector zones 200 is provided in a base station system. The micro radio/optical sending-receiving unit 500 which communicates by radio to each of the micro sector zones 200 is provided to cover the micro sector zone 200 in a dead zone and a zone in which the traffic is concentrated and to increase the capacity of the system by improving the utilization efficiency of the communication channels by providing the micro sector zones. In this embodiment, an area in which the micro radio/optical sending-receiving unit 500 can communicate is divided into micro sector zones, and the micro radio/optical sending-receiving unit 500 is placed distributedly. It is possible that the macro sector zone 100 includes the plurality of micro sector zones 200 and the plurality of micro sector zones 200 is spotted in the macro sector zone 100. It is also possible that the plurality of micro sector zones 200 is placed in the whole macro sector zone 100 as illustrated in Fig. 10. The micro radio/optical sending-receiving unit 500 which is placed distributedly is connected to the base station 700 by an optical transmission device using the optical fiber network 600. The base station 700 communicates with all of the users located in the macro sector zone 100 including the plurality of micro sector zones. The base station 700 is provided for each of the macro sector zones 100. The base stations are respectively connected to the radio network control device 900 via the communication line 800, e.g., TTC 2M interface (2.048Mbps), T1 interface (1.5Mbps), etc. for carrying data of the user who owns the mobile station 300 and the control data. The radio network control device 900 allocates an individual setup channel to each of the base stations, or allocates the setup channel allocated to the other base station 700 to another base station 700 repeatedly as far as the quality of the transmission path does not drop by the interference. The base station 700 is in a same configuration stated in Fig. 7. For obtaining an effect of separating the paths and receiving by RAKE at the mobile station and a sending diversity effect in the base station 700, it is possible to provide the delay element 523 illustrated in Fig. 7 in all of the micro radio/optical sending-receiving unit 500.

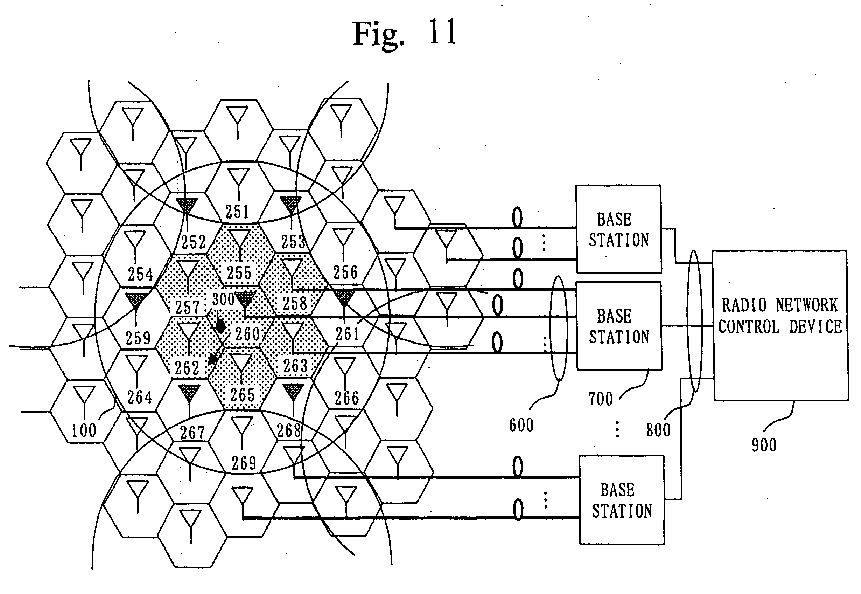

In the following, with reference to Fig. 11, an operation in the concerning base station system is explained. When the communication with the mobile station 300 starts, the antenna branches, which are seven in total, placed in micro sector zones 252, 253, 259, 260, 261, 267, and 268 are initially set as the antenna branches for communicating with the concerning mobile station 300 by the sector/antenna branch selector in sending system 723 in the encoding/modulating unit 711 and the sector/antenna branch selector in receiving system 724 in the demodulating/decoding unit 715 in the base station 700 illustrated in Fig. 8. Next, as a result of receiving the received signal from the concerning mobile station 300 in these antenna branches, it is assumed that the micro sector zone in which a path which has the highest receiving signal electric power from the mobile station 300 is the micro sector zone 260 by the searcher receiving level measuring unit 726 in Fig. 8. In that case, the searcher receiving level measuring unit 726 selects an antenna branch for the sector/antenna branch selector in sending system 723 and the sector/antenna branch selector in receiving system 724 to allocate the antenna branches placed in the micro sector zone 260 in which the mobile station 300 exists and surrounding six micro sector zones 255, 258, 263, 265, 262, and 257 to the communication with the concerning mobile station 300 based on a next receiving timing with the concerning mobile station 300. Further, the search receiving level measuring unit 726 controls selection of antenna branch of the sector/antenna branch selector in sending system 723 to select only the plurality of antenna branches in which an effective path is recognized by the searcher/receiving level 726 as the antenna branches which handle the sending signal to the concerning mobile station 300. Further, a case in which the concerning mobile station 300 moves from the micro sector zone 260 to the micro sector zone 262 during communication is assumed. In this case, the searcher receiving level measuring unit 726 can judge that the path of which receiving signal electric power from the mobile station 300 is the highest is the antenna branch placed in the micro sector zone 262. Consequently, the searcher receiving level measuring unit 726 selects the antenna branch in the sector/antenna branch selector in sending system 723 and the sector/antenna branch selector in receiving system 724, and switches the antenna branch used for communication with the concerning mobile station 300 to the antenna branch in the micro sector zone 262 and the antenna branches in surrounding six micro sector zones 257, 260, 265, 267, 264, and 259. As stated, in the example illustrated in Fig. 11, the antenna branches are switched sequentially using the search receiving level measuring unit 726, the sector/antenna branch selector in sending system 723, and the sector/antenna branch selector in receiving system 724 illustrated in Fig. 8 following the movement of the mobile station 300 so that there are always seven micro sector zones 200 which communicate with the mobile station 300. The modulating/encoding unit and the demodulating/decoding unit in the base station 700 can switch independently from the radio network control device 900. Further, there is an effect that the handover between the micro sector zones following the movement of the mobile station 300 becomes unnecessary. Further, there is the receiving effect by RAKE at the mobile station 300 by the sending diversity in the base station 700 and the effect of reducing the sending electric power in the mobile station 300 and the base station 700 by providing the micro sector zones. Further, the base station 700 includes interference replica producing and interference replica deducting function and adaptive-weighting calculation and adaptive-weighting synthesizing function as illustrated in Fig. 8. Further, since the base station 700 which is used commonly is provided for the plurality of micro radio/optical sending-receiving units 500, an effect of further reducing the interference can be expected, and the capacity of the base station system can be increased. In the example of Fig. 11, the antenna branch selector allocated seven, however it is possible to increase or decrease the number according to environment of radio wave propagation and a zone radius of the micro sector zone.

As stated, in this embodiment, the macro sector zone 100 includes the plurality of micro sector zones 200, and the micro radio/optical sending-receiving unit 500 including the antenna is provided in each of the micro sector zones 200. The area in which the micro radio/optical sending-receiving unit 500 can communicate becomes the micro sector zones, and the plurality of micro radio/optical sending-receiving units 500 is provided distributedly. The micro radio/optical sending-receiving units 500 which are provided distributedly are connected to the base station 700 via the optical transmission device using the optical fiber network 600. The base station 700 communicates with all of the users who are located in the macro sector zone 100 including the plurality of micro sector zones 200, and is set up for each of the macro sector zones. Each of the base stations is connected to the radio network control device 900 via the communication line 800 which carries the user data and the control data handled in the communication with the mobile station 300. The radio network control device 900 allocates the individual setup channel to each of the base stations 700, or allocates the setup channel allocated to the other base station 700 to another base station 700 repeatedly as far as the quality of the transmission path does not drop by the interference. The base station 700 has a same configuration with Embodiment 1-9. It is possible to provide the delay element in all of the micro radio/optical sending-receiving units 500 according to the zone radius. When the communication with the mobile station 300 is started, the sector/antenna branch selector in sending system 723 and the sector/antenna branch selector in receiving system 724 in the modulating/encoding unit and the demodulating/decoding unit in the base station 700 set initially the antenna branch placed in the plurality of micro sector zones 200 among the macro sector zone 100 which is covered by the base station 700 as an antenna branch for communicating with the mobile station 300. Next, since the received signal from the concerning mobile station 300 is received from these antenna branches, the searcher receiving level measuring unit 726 selects the antenna branch for the sector/antenna branch selector in sending system 723 and the sector/antenna branch selector in receiving system 724. The searcher receiving level measuring unit 726 selects the antenna branch placed in the micro sector zone 200 in which the path of which the electric power received from the mobile station is the highest and the antenna branches placed in the surrounding micro sector zone 200 among the antenna branches placed in the micro sector zone 200 which was initially set by the searcher receiving level measuring unit 726. These antenna branches are allocated to communicate with the concerning mobile station 300 from a next receiving timing. The searcher receiving level measuring unit 726 controls so that the sector/antenna branch selector in sending system 723 selects the antenna branch handling the sending signal to the concerning mobile station 300 from the plurality of antenna branches in which the effective path is confirmed by the searcher receiving level measuring unit 726. When the concerning mobile station 300 moves during communication and moves to the arbitrary micro sector zone 200, the searcher receiving level measuring unit 726 measures the receiving level (electric power of the received signal), and the sector/antenna branch selector in sending system 723 and the sector/antenna branch selector in receiving system 724 select again the antenna branch placed in the micro sector zone 200 of which receiving level is highest and the antenna branch placed in the plurality of the surrounding micro sector zones based on the measurement of the receiving level (electric power of the received signal). Accordingly, the antenna branch used for communication with the concerning mobile station 300 is switched. Therefore, there is an effect to make the handover between the micro sector zones due to the movement of the mobile station 300 unnecessary. There is the receiving effect by RAKE at the mobile station 300 by transmission diversity in the base station 700. Further, there is an effect of lowering the sending electric power of the mobile station 300 and the base station by providing the micro sector zones. Further, the base station 700 has the interference replica producing function provided, the interference replica deducting function, the adaptive-weighting calculating function, the adaptive-weighting synthesizing function, and the base station 700 is used commonly. Hence, there is an effect of increasing the capacity of the base station system.

As stated, in all of the embodiments, each of operations in each of the units is related each other. Each of the operations can be replaced with a series of operation in considering the relationship of the above-stated operations. By being replaced, embodiments of the invention in methods can be realized. Further, by replacing the operations of each of the above units with processing in each of the units, embodiments of the invention in programs and computer-readable storage medium storing the programs can be realized. These embodiments can be configured in programs which can operate in any computer.

Further, software and programs in each of the embodiments can be realized in firmware stored in ROM (READ ONLY MEMORY). Or, each of functions of the stated program can be realized in combining the software, firmware and hardware.

In the embodiments of the programs and the embodiments of the computer-readable storage medium storing the programs, each of processing is performed in the programs. The programs are stored in a storing unit, and the programs are read in central processing unit (CPU) from the storing unit. Each of the flow charts is performed in the central processing unit. The storing unit and the central processing unit are not illustrated.

### Industrial Applicability

As stated, since the base station 700 which is used commonly for the macro radio communication unit and the micro radio communication unit is provided in this invention, it is possible to reduce the size, the weight and the price of the radio communication unit placed in the micro sector zone.

The radio network control device can allocate the setup channels of the macro radio communication unit and the micro radio communication unit.

Since the radio network control device gives priority to permission of the location registration request by the mobile station in the micro sector zone, it is possible to minimize the sending electric power from the base station and reduce the interference between the users.

Further, the base station includes the plurality of encoding/modulating units provided for the plurality of mobile stations. Therefore, the resource of the encoding/modulating units can be utilized effectively.

Further, the base station includes the plurality of encoding/modulating units provided for each of the plurality of mobile stations. Therefore, the resource of the encoding/modulating unit which exists for each of the users can be utilized effectively.

Further, the micro radio communication unit includes a delay unit. Therefore, it is possible to separate the paths during transmission from the base station to the mobile stations.

Further, the base station includes the plurality of demodulating/decoding units provided for the plurality of mobile stations. Therefore, the resource of the demodulating/decoding unit can be utilized effectively.

Further, the base station includes the plurality of demodulating/decoding units provided for each of the plurality of mobile stations. Therefore, the resource of the demodulating/decoding unit which exists for each of the users can be utilized effectively.

Further, the micro radio communication unit includes the delay unit. Therefore, it is possible to separate the paths during transmission from the mobile stations to the base station.

Further, it is possible to select the operation for reducing the interference using the sector/antenna branch selector in sending system included in the encoding/modulating unit.

Further, it is possible to select the operation for reducing the interference using the sector/antenna branch selector in receiving system included in the demodulating/decoding unit.

Further, it is possible to perform the operation for reducing the interference using the interference replica producing unit without the control by the radio network control device.

Further, the radio network control device distinguishes if the user moves in the high speed. Therefore, the communicating electric power can be minimized.

Further, since the base station distinguishes if the user is the user who sends with high electric power, it is possible to eliminate the interference between the macro sector zone and the micro sector zone.

Further, since the micro radio communication unit includes one of the omni-antenna and the sector antenna, the radio wave can be concentrated in a spot.

Further, since the plurality of micro radio communication units uses the base station commonly, the handover between the micro sector zones becomes unnecessary.

Further, because of the method for communicating by radio between the macro radio communication unit and the micro radio communication unit by using the base station commonly, the micro sector base station becomes unnecessary.

Further, because of the program of communicating by radio between the macro radio communication unit and the micro radio communication unit by using the base station commonly, the processing of communication by radio between the macro radio communication unit and the micro radio communication unit can be executed in the computer.

Further, the computer-readable storage medium storing the programs of communicating by radio between the macro radio communication unit and the micro radio communication unit by using the base station commonly is used as the medium, and the processing of communicating by radio can be executed in the computer by the program read from the storage medium by the computer.

## Claims

1. A radio communication base station system comprising:
a macro radio communication unit for communicating by radio with a mobile station which exists in a macro sector zone which is an area for communicating by radio with the mobile station;
a micro radio communication unit for communicating by radio with the mobile station which exists in a micro sector zone which is a part of the macro sector zone; and
a base station which is commonly used by the macro radio communication unit and the micro radio communication unit.

2. The radio communication base station system of claim 1 further comprising:
a radio network control device for allocating a setup channel which is necessary for the mobile station to register a location respectively for the macro radio communication unit and the micro radio communication unit and sending allocation information of the allocated channel to the base station.

3. The radio communication base station system of claim 2,
wherein the base station receives a location registration request sent by the mobile station via the macro radio communication unit and the micro radio communication unit, and sends the location registration request received to the radio network control device;
wherein the radio network control device judges if the location registration request sent by the base station is a request for registering a location in the micro sector zone or a request for registering a location in the macro sector zone, sends location registration permission to the base station when the location registration request is the request for registering the location in the micro sector zone, and sends location registration unpermission to the base station when the location registration request is the request for registering the location in the macro sector zone.

4. The radio communication base station system of claim 1, wherein the base station includes a plurality of encoding/modulating units set for each of a plurality of mobile stations for encoding and modulating an electric signal, and a multiplexer connected to the plurality of coding/modulating units for multiplexing the electric signal modulated by the plurality of coding/modulating units.

5. The radio communication base station system of claim 1, wherein the base station includes a plurality of encoding/modulating units set for each of a plurality of mobile stations for encoding and modulating an electric signal, and a multiplexer connected to all of the plurality of coding/modulating units for multiplexing the electric signal modulated by the plurality of coding/modulating units.

6. The radio communication base station system of claim 1, wherein the base station includes a plurality of encoding/modulating units set for all of a plurality of mobile stations for encoding and modulating an electric signal, and a multiplexer connected to all of the plurality of coding/modulating units for multiplexing the electric signal modulated by the plurality of coding/modulating units and outputting the electric signal multiplexed, wherein the micro radio communication unit includes a delay unit for operating a time factor of the electric signal outputted by the multiplexer.

7. The radio communication base station system of claim 1, wherein the macro radio communication unit includes an electric/optical converter for converting an electric signal into an optical signal, wherein the micro radio communication unit includes an electric/optical converter for converting an electric signal to an optical signal, wherein a plurality of base stations includes a plurality of optical/electric converters for converting the optical signals converted by macro radio communication unit and the micro radio communication unit into electric signals, and a demodulating/decoding unit connected to the plurality of optical/electric converters for demodulating and decoding the electric signal converted by the plurality of optical/electric converters.

8. The radio communication base station system of claim 1, wherein the macro radio communication unit includes an electric/optical converter for converting an electric signal into an optical signal, wherein the micro radio communication unit includes an electric/optical converter for converting an electric signal into an optical signal, wherein the base stations includes a plurality of optical/electric converters for converting the optical signals converted by the macro radio communication unit and the micro radio communication unit into electric signals, and a demodulating/decoding unit connected to all of the plurality of optical/electric converters for demodulating and decoding the electric signal converted by the plurality of optical/electric converters.

9. The radio communication base station system of claim 1, wherein the macro radio communication unit includes an electric/optical converter for converting an electric signal into an optical signal, wherein the micro radio communication unit includes an electric/optical converter for converting an electric signal into an optical signal and a delay unit for operating a time factor of a radio signal, wherein the base stations includes a plurality of optical/electric converters for converting the optical signals converted by the macro radio communication unit and the micro radio communication unit into electric signals, and a demodulating/decoding unit connected to all of the plurality of optical/electric converters for demodulating and decoding the electric signals converted by the plurality of optical/electric converters.

10. The radio communication base station system of claim 4, wherein the encoding/modulating unit of the base station includes a sector/antenna branch selector in sending system for selecting a plurality of macro radio communication units and micro radio communication units.

11. The radio communication base station system of claim 7, wherein the demodulating/decoding unit of the base station includes a sector/antenna branch selector in receiving system for selecting and receiving the electric signals converted by the plurality of the optical/electric converters.

12. The radio communication base station system of claim 7, wherein the base station includes an interference replica producing unit connected to all of the demodulating/decoding units for producing interference information from a received signal demodulated by the demodulating/decoding unit, spread information for spreading the received signal and an estimated transmission path characteristic estimated a transmission path of the received signal.

13. The radio communication base station system of claim 7, wherein the demodulating/decoding unit includes a moving speed detecting unit for detecting and sending a moving speed of the mobile station, wherein the radio network control device receives the moving speed of the mobile station sent by the demodulating/decoding unit, compares the moving speed with a reference moving speed determined by the radio network control device, and sends channel allocation information for allocating to the macro radio communication unit to the base station when the moving speed of the mobile station is higher than the reference moving speed, and sends channel information for allocating to the micro radio communication unit to the base station when the moving speed of the mobile station is at or lower than the reference moving speed.

14. The radio communication base station system of claim 12, wherein the base station compares a receiving electric power of a received signal of the mobile station with a reference receiving electric power determined by the base station, wherein the interference replica producing unit produces an interference replica, deducts the interference replica from a received signal of another mobile station existing in one of the micro sector zone and the macro sector zone located in a same direction with an arrival angle of the received signal from the mobile station, and directs an antenna toward the arrival direction of the received signal from the mobile station when the receiving electric power is higher than the reference receiving electric power, and deducts the interference replica from a received signal of another mobile station existing in the micro sector zone and a micro sector zone adjacent to the micro sector zone, and deducts the interference replica from a received signal of another mobile station existing in the macro sector zone located in the same direction with the arrival angle of the received signal from the mobile station when the receiving electric power is at or lower than the reference receiving electric power.

15. The radio communication base station system of claim 1, wherein the macro radio communication unit includes an adaptive array antenna, wherein the micro radio communication unit includes one of an omni-antenna and a sector antenna.

16. A radio communication base station system comprising:
a plurality of micro radio communication units including an electric/optical converter for converting an electric signal into an optical signal, for communicating by radio with a mobile station existing in a micro sector zone which is an area for communicating by radio with the mobile station;
a radio network control device for allocating a channel for communicating by radio to a micro radio communication unit, and sending channel allocation information allocated;
a base station which is commonly used by the plurality of micro radio communication units;
a plurality of encoding/modulating units including a sector/antenna branch selector in sending system respectively set for a plurality of mobile stations for selecting the micro radio communication unit for communicating by radio for the micro sector zone of which receiving electric power of a received signal of the mobile station is high and the plurality of micro radio communication units for communicating by radio for the micro sector zone adjacent to the micro sector zone for encoding and modulating an electric signal;
a multiplexer connected to the plurality of encoding/modulating units for multiplexing the electric signal modulated by the plurality of encoding/modulating units;
a plurality of optical/electric converters for converting the optical signal converted by the micro radio communication unit into an electric signal; and
a demodulating/decoding unit connected to the plurality of optical/electric converters for demodulating and decoding the electric signal, including a sector/antenna branch selector in receiving system for selecting the micro radio communication unit for communicating by radio for the micro sector zone of which receiving electric power of the received signal of the mobile station is high and the plurality of micro radio communication units for communicating by radio for the micro sector zone adjacent to the micro sector zone from on the received signal of the mobile station, converted by the plurality of optical/electric converters.

17. A radio communication method comprising:
communicating by radio with a mobile station existing in a macro sector zone which is an area for communicating by radio with the mobile station;
communicating by radio with the mobile station existing in a micro sector zone which is a part of the macro sector zone; and
communicating by radio with the mobile station existing in the macro sector zone and communicating by radio with the mobile station existing in the micro sector zone by using a base station which is used commonly.

18. A computer-executable radio communication program comprising:
code segment for communicating by radio with a mobile station existing in a macro sector zone which is an area for communicating by radio with the mobile station;
code segment for communicating by radio with the mobile station existing in a micro sector zone which is a part of the macro sector zone; and
code segment for communicating by radio with the mobile station existing in the macro sector zone and communicating by radio with the mobile station existing in the micro sector zone by using a base station which is used commonly.

19. A computer-readable storage medium storing a computer-executable radio communication program comprising:
code segment for communicating by radio with a mobile station existing in a macro sector zone which is an area for communicating by radio with the mobile station;
code segment for communicating by radio with the mobile station existing in a micro sector zone which is a part of the macro sector zone; and
code segment for communicating by radio with the mobile station existing in the macro sector zone and communicating by radio with the mobile station existing in the micro sector zone by using a base station which is used commonly.
